# EUROPEAN PATENT APPLICATION

(11) **EP 4 845 257 A2**
(43) Date of publication of application: **25.11.2026**
(21) Application number: 26210398.9
(22) Date of filing: 08.10.2021
(51) Int. Cl.: H04W 72/04

(54) **DOWNLINK CONTROL CHANNEL FOR NR FROM 52.6 GHZ AND ABOVE**

(30) Priority: 08.10.2020 US 202063089046 P; 10.05.2021 US 202163186576 P
(62) Document number(s) of the earlier application(s) in accordance with Art. 76 EPC: 21814951.6 / 4 226 563
(71) Applicant: IPLA Holdings Inc., New York, NY 10010 (US)
(72) Inventor: TSAI, Allan, Wilmington, 19809-3727 (US); SVEDMAN, Patrick, Wilmington, 19809-3727 (US); PAN, Kyle, Wilmington, 19809-3727 (US); LI, Yifan, Wilmington, 19809-3727 (US); ADJAKPLE, Pascal, Wilmington, 19809-3727 (US); AWADIN, Mohamed, Wilmington, 19809-3727 (US)
(74) Representative: Witte, Weller & Partner Patentanwälte mbB

(57) **Abstract**

Methods, systems, and devices may assist in operation of DL control channel for NR from 52.6 GHz and above. There may be single DCI scheduling for multi-scheduling, such as single DCI schedule multi-PDSCH or single DCI schedule multi-CC.

## Description

### CROSS-REFERENCE TO RELATED APPLICATIONS

This application claims the benefit of U.S. Provisional Patent Application No. 63/089,046, filed on October 8, 2020, entitled "Downlink Control Channel Design For Nr From 52.6 Ghz And Above," and the benefit of U.S. Provisional Patent Application No. 63/186,576, filed on May 10, 2021, entitled "Downlink Control Channel Design For Nr From 52.6 Ghz And Above," the contents of both are hereby incorporated by reference herein.

### BACKGROUND

Similar to the previous radio access systems, e.g., LTE, 5G new radio (NR) uses the physical downlink control channel (PDCCH) to perform physical layer control functions such as scheduling the downlink (DL) broadcast and DL/uplink (UL) unicast data transmission and signaling triggers for periodic and aperiodic transmission.

This background information is provided to reveal information believed by the applicant to be of possible relevance. No admission is necessarily intended, nor should be construed, that any of the preceding information constitutes prior art.

### SUMMARY

Disclosed herein are methods, systems, and devices that may assist in operation of DL control channel for NR from 52.6 GHz and above. In an example, there may be compact (e.g., reduced payload) DCI format 0_x and 1_x for NR from 52.6 GHz and above. There may be single DCI scheduling for multi-scheduling, such as single DCI schedule multi-PDSCH or single DCI schedule multi-CC.

In an example, there may be a PDCCH monitoring unit for NR from 52.6 and above. In an example, there may be a PDCCH coverage enhancement method for NR from 52.6 GHz and above, which may consider compact DCI format 0_x and 1_x or PDCCH repetition for NR from 52.6 GHz and above (CORESET or SS configuration in a BWP).

In an example, there may be single DCI scheduling multiple PDSCH(s) with different TCI states from M-TRP for a serving cell. TCI state may include the non-zero power CSI-RS resource ID, SSB index, or SRS resource ID. There may be single DCI scheduling multiple PDSCH(s) with different TCI states from M-TRP or across component carriers (CC).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not constrained to limitations that solve any or all disadvantages noted in any part of this disclosure.

### BRIEF DESCRIPTION OF THE DRAWINGS

A more detailed understanding may be had from the following description, given by way of example in conjunction with the accompanying drawings wherein:
FIG. 1 illustrates an exemplary single DCI schedule of multiple PDSCHs;
FIG. 2 illustrates an exemplary single DCI schedule of multiple PDSCHs and the DCI information is split into two parts;
FIG. 3 illustrates an exemplary single DCI schedule of multiple PDSCHs;
FIG. 4 illustrates an exemplary UE procedure for single-to-multiple scheduling;
FIG. 5 illustrates an exemplary intra-band contiguous channel aggregation in a WiFi 802.11ad/ay B=2.16 GHz;
FIG. 6 illustrates an exemplary signal DCI schedule of multiple PDSCHs across multiple CCs;
FIG. 7 illustrates an exemplary signal DCI schedule of multiple PDSCHs across multiple CCs;
FIG. 8 illustrates an exemplary PDCCH monitoring span for NR from 52.6 GHz and above;
FIG. 9 illustrates an exemplary PDCCH repetition for supporting NR from 52.6 GHz and above;
FIG. 10A illustrates exemplary PDCCH monitoring methods for supporting NR from 52.6 GHz and above in which there may be Multiple TRPs transmission when the backhaul is ideal;
FIG. 10B illustrates exemplary PDCCH monitoring methods for supporting NR from 52.6 GHz and above in which there may be a single DCI schedule multiple (e.g., two) PDSCHs from multiple (e.g., two) TRPs;
FIG. 10C illustrates exemplary PDCCH monitoring methods for supporting NR from 52.6 GHz and above in which there may be a gap symbol required when a UE performs beam switching for PDSCH 1 and 2 reception from TRP;
FIG. 11 illustrates an exemplary CSS and USS configuration in a PDCCH monitoring span;
FIG. 12 illustrates an exemplary non-aligned PDCCH monitoring that spans among multiple scheduling cells;
FIG. 13 illustrates an exemplary UE that is scheduled with 3 cells and a single DCI schedule up to 8 PDSCHs;
FIG. 14 illustrates an exemplary UE that is scheduled with 2 cells and a single DCI schedule up to 8 PDSCHs, time-domain bundling is enabled;
FIG. 15 illustrates more than one TCI states that may occur during multi-PDSCH and *timeDurationForQCL;*
FIG. 16 illustrates an exemplary Default TCI state that is applied for multi-PDSCH and UE assume the default DCI is applied for the PDCCH with different QCL assumption during the multi-PDSCH period
FIG. 17 illustrates an exemplary single DCI schedule;
FIG. 18 illustrates an exemplary display (e.g., graphical user interface) that may be generated based on the methods, systems, and devices to assist in operation of DL control channel for NR from 52.6 GHz and above.
FIG. 19A illustrates an example communications system;
FIG. 19B illustrates an exemplary system that includes RANs and core networks;
FIG. 19C illustrates an exemplary system that includes RANs and core networks;
FIG. 19D illustrates an exemplary system that includes RANs and core networks;
FIG. 19E illustrates another example communications system;
FIG. 19F is a block diagram of an example apparatus or device, such as a WTRU; and
FIG. 19G is a block diagram of an exemplary computing system.

### DETAILED DESCRIPTION

### PDCCH monitoring capability in Rel-15

In NR, downlink control information (DCI) is transmitted from the gNB to the UE on PDCCH. A PDCCH consists of 1, 2, 4, 8 or 16 control channel elements (CCE). A CCE consist of 6 resource element groups (REGs). A REG equals one resource block (RB) during one OFDM symbol that contains 12 resource elements (REs). The number of CCEs that a PDCCH has is defined as the aggregation level (AL). For each DCI, 1, 2, 4, 8, or 16 CCEs can be allocated. NR PDCCH is with QPSK modulation. A CCE contains 54 PDCCH payload REs (e.g., 72 REs may exclude 18 REs which are used for PDCCH DMRS in a CCE) and it can carry 108 bits per CCE.

The UE does not know the exact location of PDCCH so it carries out blind decoding in a search space inside the control resource sets (CORESETs). NR Rel-15 supports distributed and localized resource allocation for a DCI in a CORESET. This is done by configuring interleaved or non-interleaved CCE-to-REG mapping for each CORESET. A UE may be configured with one or multiple CORESETs to monitor PDCCH. Each of the possible location of PDCCH in the search space is called PDCCH candidate. PDCCH candidates can have overlapped CCEs.

PDCCH candidates to be monitored are configured for a UE by means of search space (SS) sets. There are two SS set types have in NR. The first SS set is the common SS (CSS) set, which is commonly monitored by a group of UEs in the cell, and the second SS set is UE-specific SS (USS) set, which is monitored by an individual UE. A SS is a set of candidate control channels comprising a set of CCEs at a given aggregation level, which the device is supposed to monitor and decode. Due to multiple aggregation levels, a device can have multiple search spaces. A UE can be configured with up to 10 SS sets each for up to 4 BWPs in a serving cell. Therefore, a UE can be configured with up to 40 SS sets, where each has an index of 0-39. A SS set with index s (0 ≤ s < 40) is associated with only one CORESET with index *p* by *controlResourceSetld.* The UE determines the slot for monitoring the SS set with index s based on the higher layer parameters for periodicity *kₛ* and offset *oₛ* by *monitoringSlotPeriodicityAndOffset,* where periodicity *kₛ* and offset *oₛ* provide a starting slot and duration *Tₛ* ≤ *kₛ* provides the number of consecutive slots where the SS set is monitored starting from the slot identified by *kₛ* and offset *oₛ*. A PDCCH monitoring pattern within a slot, indicating first symbol(s) of the CORESET within a slot for PDCCH monitoring, by *monitoringSymbols WithinSlot.*

In NR, PDCCH minimum processing times is confined in units of symbols for SCS/numerologies. The numbers of monitored PDCCH candidate per slot and non-overlapped CCEs per slot decrease with SCS/numerologies. See 3GPP TS 38.213 NR. Depending on the configuration, the number of PDCCH candidates may be limited by the number of blind decoding attempts, or by the number of CCE that require channel estimates. In NR, number of monitored PDCCH candidates and non-overlapped CCEs per slot is the UE capability. In Rel-15, PDCCH maximum number ${M}_{PDCCH}^{max , slot , μ}$ of monitored PDCCH candidates per slot for a DL BWP with SCS configuration *µ* ∈ {0,1,2,3} for a single serving cell can be {44, 36, 22, 20}, and the maximum number ${C}_{PDCCH}^{max , slot , μ}$ of non-overlapped CCEs per slot for a DL BWP with SCS configuration *µ* ∈ {0,1,2,3} for a single serving cells can be {56, 56, 48, 32}, respectively.

In NR, the DCI formats and DCI sizes are decoupled. Different DCI formats can have different sizes, but several formats can share the same DCI size. An NR device needs to monitor up to four (e.g., "3+1") different DCI sizes: one size used for the fallback DCI formats, one for downlink scheduling assignments, and unless the uplink downlink non-fallback formats are size-aligned, one for uplink scheduling grant. In addition, a device may need to monitor SFI and/or preemption indication DCIs using a fourth size, depending on the configuration.

### 1.1 PDCCH Enhancement in Rel-16

In Rel-15, when the gNB transmits data on mini-slot for Ultra-Reliable and Low Latency Communications (URLLC) services, the UE may need to monitor PDCCH in CORESET at 2,4 or 7 symbols instead of each slot. Hence, it limits PDCCH candidates and CCEs which reduce scheduling flexibility of the gNB for PDCCH configuration. In Rel-16, it increases PDCCH monitoring capability on at least the maximum number of non-overlapped CCEs per monitoring span for a set of applicable SCSs. NR supports (X, Y) as the monitoring span for SCS of 15 kHz and 30 kHz where the first number X is the number of symbols between the beginning of two consecutive monitoring occasions, the second number Y is the number of symbols of a monitoring occasion. In NR Rel-16, per monitoring span (X, Y) can be set as (2, 2), (4, 3) and (7, 3). The maximum number of non-overlapping CCEs per monitoring span for combination (7, 3) for SCS of 15 kHz and 30 kHz is defined with a value of 56 in Rel-16. Besides, the maximum number of non-overlapping CCEs per monitoring span is the same across different spans in a slot and PDDCH might be dropped in a span in case of over scheduling. In Rel-16, the maximum number ${M}_{PDCCH}^{max , span , μ}$ of monitored PDCCH candidates per span (*X* = *7, Y =* 3) for a DL BWP with SCS configuration *µ* ∈ {0, 1} for a single serving cell can be {44, 36} and the maximum number ${C}_{PDCCH}^{max , span , μ}$ of non-overlapped CCEs per span for a DL BWP with SCS configuration *µ* ∈ {0, 1} for a single serving cell can be {56, 56}, respectively. The per monitoring span (X, Y) supports SCS/numerologies 15 KHz/*µ* = 0 and 30 KHz/*µ* = 1 only.

The UE can be configured by the gNB to monitor PDCCH for the maximum number of PDCCH candidates and nonoverlapping CCEs defined per slot as in NR Rel-15 or for the maximum number of PDCCH candidates and non-overlapping CCEs defined per span as in NR Rel-16.

### Compact DCI for URLLC in Rel-16

It has been agreed in NR Rel-16 supports a reduction of the number of bits for DCI format size compared to the size of DCI format 0_0/1_0 and 0_1/1_1. One of the major reasons of using a compact DCI may be to increase reliability of DCI. A compact DCI with a smaller payload achieves higher reliability than a normal DCI (e.g., DCI format 0_0/1_0 and 0_1/1_1) with the same AL value. In addition, a compact DCI consumes less resources than regular DCI because a lower AL may be applied so reducing the probability that PDCCH cannot be transmitted in the nearest CORESET due to a shortage of resources. The sizes of fields have been agreed for compact DCI format 1_2 to schedule DL transmission and DCI format 0_2 to schedule UL transmission.

The gNB can configure the UEs to monitor only the compact DCI format instead of DCI format 0_0/1_0 and 0_1/1_1 so the UEs are not suffering from a growth of blind decodes. The compact DCI design reduce to the range from 10 to 16 bits by setting the number of bits in some fields to be configurable as well as reducing the sizes of some fields in DCI format 0_0/1_0 and 0_1/1_1. With this, DCI message payload can be controlled by network such that it can be very compact thus, the system can take a good balance between higher performance and higher flexibility. Those reduction (fields) in DCI format 1_2 states as follows: redundancy version (RV), hybrid automatic repeat request (HARQ) field and sounding reference signal (SRS) request field. RV field is configurable from 0 bit to 2 bits compared to a fixed 2 bits in DCI format 1_1. Hybrid automatic repeat request (HARQ) process field is configurable from 0 bit to 4 bits. Sounding reference signal (SRS) request field is configurable from 0 bit to 2 bits. However, priority indicator field with 0 or 1 bit is a new field added to indicate the priority of a PDSCH scheduled.

In DCI format 0_2, open loop power control (OLPC) set indication field with from 0 to 2 bits, priority indicator field with 0 or 1 bit, invalid symbol pattern indicator field with 0 or 1 bit are new fields added to be compatible with new standards of PUSCH transmission.

### PDCCH design issues due to increase of SCS/Numerologies

When the larger SCSs/numerologies are introduced, the duration of slot in a subframe will be decreased accordingly. Due to the limited PDCCH processing capability, the number of monitored PDCCH candidates and the number of non-overlapped CCE per slot are expected to be decreased for the higher SCSs/numerologies (e.g., SCS = 240 KHz, 480 KHz, 960 KHz, etc.) scenarios in frequency range greater than 52.6 GHz. Therefore, the decreased number of BD/CCE per slot may limit the scheduling flexibility. Besides, monitoring every slot for PDCCH becomes too frequent and may consume too much UE power in higher frequency range. Besides, link budget reduces roughly by 3dB when the subcarrier spacing doubles. Therefore, PDCCH coverage is degraded when the higher SCSs/numerologies are introduced for NR 52.6 GHz and above. A DCI design that takes into account these issues needs to be considered when the higher SCSs/numerologies are introduced for 52.6 GHz and above.

### Beam based PDCCH design issues from 52.6 GHz and above

Single DCI which schedules multiple PDSCH(s) can reduce the BD efforts for monitoring PDCCH for NR from 52.6 to 71 GHz band. In Rel-16, a single DCI can schedule two PDSCH(s) from two different TRPs. The single DCI indicates two TCI states, and the two TCI states are mapped to different PDSCH. These two TCI states are ordered (1st TCI state and 2nd TCI state) and signaled to the UE in that order (1st TCI state and 2nd TCI state) based on the activation MAC-CE. When two TCI states are indicated in a DCI, the UE may expect to receive multiple slot level PDSCH transmission occasions of the same TB with two TCI states used across multiple PDSCH transmission occasions in the consecutive slots.

When a single DCI schedule multiple PDSCH(s) for distinct TB(s), the TCI state for scheduled multiple PDSCHs with different TBs need to be specified especially with multiple TRP(s) (M-TRP) scenario. In addition, the beam (or TCI state) switching time (e.g., 90 ns) may not be negligible for the smaller slot and symbol duration associated with higher SCS such as 960 KHz, making necessary the use of gap symbol(s), for the switching of TCI states for multiple PDSCH(s).

Disclosed in more detail herein are the following methods for DCI design for NR from 52.6 GHz and above, which may include compact (e.g., reduced payload) DCI format 0_x and 1_x for NR from 52.6 GHz and above. Further there maybe single DCI scheduling for multi-scheduling, such as single DCI schedule multi-PDSCH or single DCI schedule multicomponent carrier (CC). There may be a PDCCH monitoring unit for NR from 52.6 and above. There may be PDCCH coverage enhancement method for NR from 52.6 GHz and above, which may include compact DCI format 0_x and 1_x or PDCCH repetition for NR from 52.6 GHz and above (CORESET and/or SS configuration in a BWP).

Disclosed in more detail herein are the following methods for beam based PDCCH and PDSCH design for NR from 52.6 GHz and above. In an example, there may be single DCI scheduling multiple PDSCH(s) with different TCI states from M-TRP for a serving cell. TCI state includes can include the non-zero power CSI-RS resource ID, SSB index and SRS resource ID. In an example, there may be single DCI scheduling multiple PDSCH(s) with different TCI states from M-TRP and across component carriers (CC).

### DCI design

### New compact DCI format

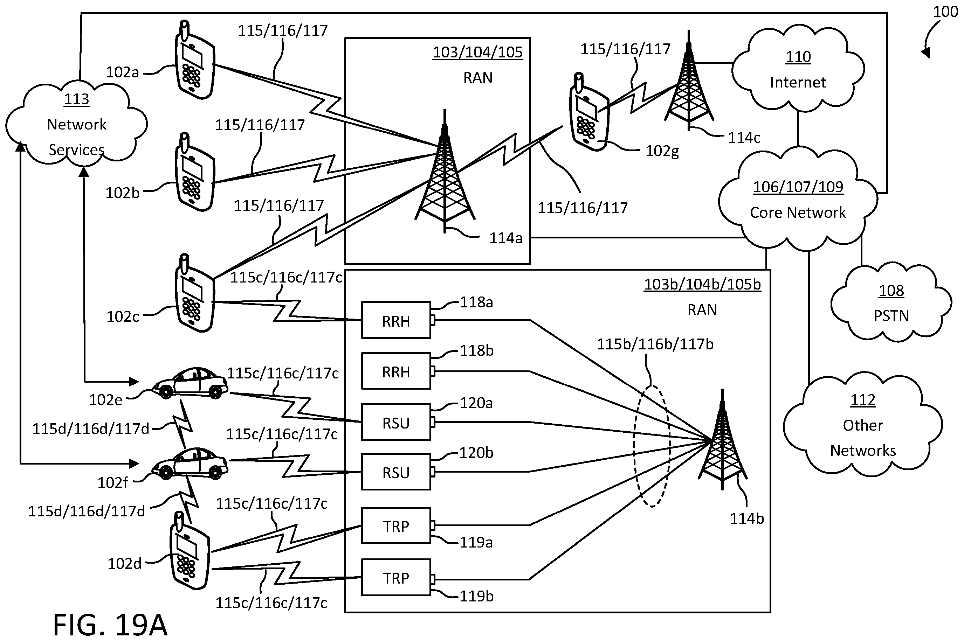

When operating at higher carrier frequencies like 52.6 GHz and above, larger antenna array with higher number of antenna elements may be used at a base station (e.g., gNB 114 of FIG. 19A). In practice, the larger the number of antenna elements used, the higher the antenna gains, and the narrower the beams (or smaller beam width). For higher antenna gains, only fewer UEs may be covered by the same beam due to the narrower beam width. Since less UEs can be multiplexed in frequency domain resource within a OFDM symbol, the transport block (TB) can be occupied most of resource elements (REs) in a OFDM symbol. Therefore, a compact DCI for NR from 52.6 GHz and above is disclosed because some of DCI field can be reduced for further optimization. Like some of bit field in DCI format 1_0/1_1 can be further reduced such as the frequency domain resource assignment (FDRA) or the time domain resource assignment (TDRA), TCI state, PDSCH-to-HARQ-timing-indicator, etc. can be reduced for new compact DCI format 1_x design for NR from 52.6 GHz to 71 GHz.

There are several advantages to reduce the DCI format payload size for NR from 52.6 GHz and above. The first reason is to enhance the coverage and increase the reliability for DCI reception. A DCI with a smaller payload achieves better reliability and coverage than the normal DCI (e.g., DCI format 1_0/1_1) with the same aggregation level (AL). The second reason is to reduce PDCCH blocking probability and enhance the scheduling flexibility. This is because DCI with less size consumes less PDCCH resources and a lower AL may be applied so the probability that PDCCH can be transmitted in the nearest CORESET after the arrival of data. The third reason is to reduce the decoding complexity and potentially save UE power consumption. Also, the presence of a new compact DCI format 1_x as the compact format may increase the number of BDs for a UE (note: number of BD for a UE = number of PDCCH candidates multiply by the number of DCI format sizes). Therefore, like compact DCI for URLLC in Rel-16, a new compact DCI format 1_x can be disclosed for NR from 52.6 GHz and above. Plus, gNB 114 may config the UEs to monitor only the compact DCI format 1_x instead of DCI format 0_0/1_0 and 0_1/1_1 so that the total number of blind decodes won't increase for a UE. In addition, gNB 114 may dynamically or semi-statically switch between the DCI formats that are supposed to be monitored by the UE. For example, gNB 114 may transmit MAC-CE to switch the monitoring of DCI format 0_0/1_0 or 0_1/1_1 to DCI format 1_x.

In Rel-15/16, the frequency domain allocation method can adopt type 0, type 1, and the dynamic switch method (i.e., the frequency resource allocation switches between the type 0 and 1) for frequency resource allocation as Rel-15/16. In DL resource allocation type 0, the resource block assignment information includes a bitmap representing the RBGs that are allocated to the scheduled UE where RBG is a set of consecutive physical resource blocks defined by a higher layer parameter and the size of the carrier BWP. To reduce the required bits for FDRA based on type 0, the configuration of RBGs may be reduced to further reduce the bits for this field. For resource allocation type 1, it can reduce the number of starting location of PRB and/or the number of contiguous PRB allocation length to reduce FDRA field in DCI. For NR supported numerologies/SCS in Rel-15/16, the number of bits for the indication of RIV is equal to ${log}_{2} \left(\left⌈\frac{{N}_{PRB}^{BWP} \left({N}_{PRB}^{BWP}+1\right)}{2}\right⌉\right)$ , where ${N}_{PRB}^{BWP}$ stands for the number of PRB in a BWP. The starting location of PRB can be set as $0 , 1 , 2 , … , {N}_{PRB}^{BWP}$ and the number of contiguous PRB allocation length (e.g., the allocation length from $1 , 2 , … , {N}_{PRB}^{BWP}$ PRBs) are for RIV. For example, if ${N}_{PRB}^{BWP} = 275$ PRBs (note: 275 PRBs are the maximum PRBs in NR) then the (maximum) number of bits for resource indication value (RIV) indication is equal to 16 bits. For instance, Rel-16 allow the granularity of the allocation length to be the integer multiple of *Q* PRB (e.g., the allocation length from $Q , 2 Q , … , Q \left⌊{N}_{PRB}^{BWP}/Q\right⌋$ PRBs) and the starting PRB location can be reduced to $0 , Q , 2 Q , … , Q \left⌊{N}_{PRB}^{BWP}/Q\right⌋$ then the maximum number bits for RIV can be reduced to ${log}_{2} \left(\left⌈\frac{\left⌊{N}_{PRB}^{BWP}/Q\right⌋ \left(\left⌊{N}_{PRB}^{BWP}/Q\right⌋+1\right)}{2}\right⌉\right)$ bits.

In Rel-15/16, 4 bits are used for the field 'time domain resource assignment' (TDRA) in a DCI format 1_0/1_1. The value m in TDRA field points to row number m+1 within the look-up table. The 16 rows/entries look-up table is from a pre-defined table or a table configured by RRC with the *pdsch-TimeDomainAllocationList.* The RRC parameter *pdsch-TimeDomainResourceAllocation* is used to config a time-domain relation between PDCCH and PDSCH. Timing between a downlink resource grant on a PDCCH and a downlink data transmission on a PDSCH (e.g., *K*₀), the start symbol and length (SLIV), and PDSCH mapping type (e.g., PDSCH mapping type A or B) are indicated by the m+1-th entry of the look up table.

Larger SCSs/numerologies may be introduced for NR from 52.6 GHz and above. The slot duration in a subframe may be significantly decreased as shown in Table 1, e.g., 31.25 us for SCS = 480 KHz, 15.625 us for SCS = 960 KHz, etc. The cross-slot scheduling may help UE power saving for NR from 52.6 GHz and above. Therefore, the cross-slot scheduling (e.g., PDCCH and PDSCH will not be multiplexed in a same slot) is reasonable for relaxing UE processing efforts for NR from 52.6 GHz and above. To ensure that UE has the knowledge of the minimum slot offset before PDCCH is decoded, a scheduling offset restriction (e.g., minimum *K*₀ in terms of slots) can be introduced for NR from 52.6 GHz and above. When the minimum scheduling offset (e.g., minimum *K*₀) is applied, UE is not expected to be scheduled with a DCI to receive a PDSCH with slot offset smaller than the minimum scheduling offset. In Rel-15/16, TS 38.214, those pre-defined look-up table A, B and C (e.g., Table 5.1.2.1.1-2, -3, -4 -5 in 3GPP TS 38.214 NR) for common PDSCH such as paging PDSCH, etc. may not support the cross-slot scheduling for larger SCS/numerologies. Therefore, common PDCCH for paging PDSCH is disclosed, system Information (SI) PDSCH can be adopted with the cross-slot scheduling when the SCS/numerologies are greater than a value e.g., SCS=480 KHz /*µ* = 5. The value of *K*₀ can be referred from a pre-defined table (e.g., a new set of default tables for TDRA) in the specification or via higher layer (RRC) configuration. For NR from 52.6 GHz and above, UE can know the "cross-slot" scheduling scheme for certain BWPs (e.g., for paging or RMSI PDSCH reception) when *K*₀ value is larger than zero in the look-up table. If TDRA field is not present in compact DCI format 1_x then UE can assume the default value of *K*₀ is equal to minimum *K*₀.

The number of bits for PDSCH-to-HARQ-timing-indicator in DCI format 1_x field can be reduced. The *K*₁ value can be referred from a look-up table which it can be configured by the higher layer (e.g., RRC). The look-up table may have more entries than or equal to the 2*^{b}*, where *b* stand for the number of bits for PDSCH-to-HARQ-timing-indicator. The entry in the look-up table for *K*₁ value can be modified by the higher layer (e.g., RRC). Table 1 discloses possible supported numerologies, symbol, or slot duration for NR from 52.6 GHz and above.

**Table 1**

| Numerology | *µ* = 3 | *µ* = 4 | *µ =* 5 | *µ* = 6 | *µ* = 7 |
|---|---|---|---|---|---|
| Subcarrier spacing (SCS) [KHz] | 120 | 240 | 480 | 960 | 1920 |
| Maximum FFT size | 4096 | 4096 | 4096 | 4096 | 4096 |
| Maximum number of PRBs | 264 | 264 | 264 | 264 | 264 |
| Slot duration [us] | 125 | 62.5 | 31.25 | 15.625 | 7.8125 |
| Normal cyclic prefix length [ns] | 585.94 | 292.97 | 146.48 | 73.24 | 36.62 |
| Maximum allocation bandwidth [MHz] | 380.16 | 760.32 | 1520.64 | 3041.28 | 6082.56 |
| Maximum channel bandwidth [MHz] | 400 | 800 | 1600 | 3200 | 6400 |

The transmission configuration indication (TCI) state field in DCI format 1_x can be reduced when *tci-PresentInDCI* parameter in RRC is configured. For NR form 52.6 GHz and above, most of use cases are targeting the application like Augmented reality (AR), virtual reality (VR) or factory Internet of Things (IoT). Those application is stationary or in low mobility. Besides, the propagation path for NR from 52.6 GHz and above is expected to have a higher probability on LoS paths due to the mmWave propagation characteristics. Thus, the TCI codepoint in DCI for the beam indication can be reduced. In addition, disclosed is that the DCI can be used for updating the TCI state for PDCCH for beam adaption from 52.6 GHz and above.

The following Table 2 is an exemplary of the disclosed compact DCI format 1_x for NR from 52.6 and above. In this example, it can be assumed ${N}_{PRB}^{BWP} = 275$ PRBs for a (configured) BWP. Table 2 is an exemplary of DCI format 1_x for NR from 52.6 GHz and above, assume ${N}_{PRB}^{BWP} = 275$ PRBs.

**Table 2**

| **DCI fields of Format 1_x** | **Bit size of Format 1_x (bits)** |
|---|---|
| Identifier for DCI formats | 1 |
| Carrier indicator | 0 or 3 |
| Bandwidth part indicator | 0 or 2 |
| Frequency domain resource assignment (FDRA) | < 10 |
| Time domain resource assignment (TDRA): *K*₀, SLIV and PDSCH mapping type | 0 or < 4 |
| VRB-to-PRB mapping | 0 or 1 |
| PRB bundling size indicator | 0 or 1 |
| Rate matching indicator | 0 or 2 |
| ZP CSI-RS trigger | 0 or 2 |
| TB1: Modulation and coding scheme | 5 |
| TB1: New data indicator | 1 |
| TB1: Redundancy version | 2 |
| TB2: Modulation and coding scheme | 5 |
| TB2: New data indicator | 1 |
| TB2: Redundancy version | 2 |
| HARQ Process number | 4 |
| Downlink assignment index (DAI) | 0, 2 or 4 |
| TPC command for scheduled PUCCH | 2 |
| PUCCH resource indicator | 3 |
| PDSCH-to-HARQ-timing-indicator: *K*₁ | 0 or < 3 |
| Antenna port(s) | 4, 5, or 6 |
| Transmission configuration indication (TCI) | 0 or < 3 |
| SRS request | 2 or 3 |
| CBG transmission information (CBGTI) | 0, 2, 4, 6, or 8 |
| CBG flushing out information (CBGFI) | 0 or 1 |
| DMRS sequence initialization | 1 |
| CRC | 24 |

### Single DCI schedule multiple PDSCHs for a serving cell

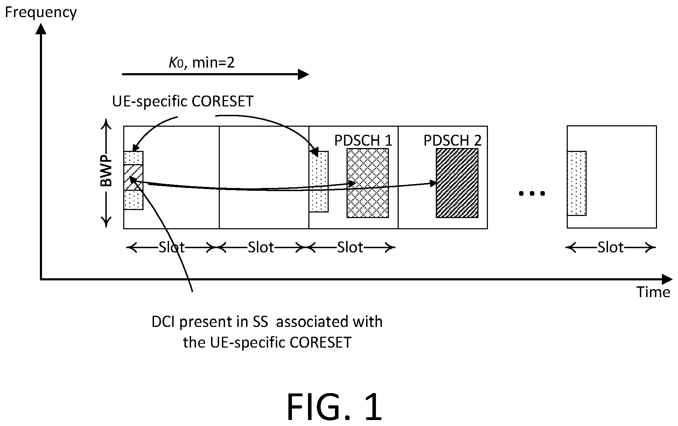

Single DCI can schedule multiple PDSCHs as shown in FIG. 1. In FIG. 1, a DCI schedules multiple (e.g., two) PDSCHs and the PDCCH monitoring rate/frequency is assumed to be 2 slots. In this example, the PDCCH monitoring frequency is reduced, thus it can reduce PDCCH decoding efforts for a UE, such as UE 102 of FIG. 19A, which is further described herein. However, some control information, such as HARQ process number, TB indication, new data indicator and redundancy version, etc., may not be shared for each scheduled PDSCH. If this single-to-multiple scheduling DCI format (e.g., format 1_y) with the DCI size PDSCHs is large (e.g., DCI > 120 bits), which it requires a larger CCE aggregation level, then PDCCH blockage may become higher thus degrading the scheduling performance. Therefore, PDCCH blockage needs to be avoided for single-to-multiple scheduling PDSCHs scenario.

Disclosed herein are methods that may assist in avoiding PDCCH blockage for single-to-multiple scheduling. The first method limits the number of scheduled PDSCHs. For example, it allows a certain number of *n* (e.g., *n* = 2) PDSCHs are scheduled by a single DCI, thus, the maximum number of bits required for DCI is capped.

The following control information in DCI bit field (or DCI field) may be separated or shared field. For shared field, the *n* PDSCHs can share the same valued indicated by DCI field. For separated field, *n* separate values are indicated to the *n* PDSCHs.
- Control information in DCI field may include shared fields.
   ∘ Carrier indicator field is for a single serving cell, this information can be shared for scheduled PDSCHs.
   ∘ Bandwidth part indicator field allows scheduled PDSCH that can be under the same BWP.
   ∘ FDRA field can be shared for scheduled PDSCHs. When FDRA field is shared, UE 102 can assume scheduled PDSCHs are with the same size and MCS.
   ∘ TDRA field can be shared for scheduled PDSCHs. When TDRA field is shared, UE can assume scheduled PDSCHs are with the same size and MCS. When TDRA is shared, the entry in the look-up table configured by RRC can include each scheduled PDSCH *K*₀ and the start symbol and length (SLIV). Scheduled PDSCHs can be allocated by consecutive slots for different scheduled PDSCHs which is configured by higher layer (e.g., RRC) parameter.
   ∘ Transmission configuration indication (TCI): Scheduled PDSCHs can share the same TCI state from a single or multiple transmission and reception point (TRP).
   ∘ PUCCH resource indicator: Scheduled PDSCHs can share a same PUCCH resource for Ack/Nack (A/N).
   ∘ PDSCH-to-HARQ-timing-indicator *K*₁: single PDSCH-to-HARQ-timing-indicator for joint A/N.
   ∘ TPC command for scheduled PUCCH: this field can be shared because common TPC may apply for UL transmission within the same BWP.
   ∘ ZP CSI-RS triggering: this field can be shared.
   ∘ SRS request: this field can be shared.
   ∘ Antenna ports and DMRS sequence initialization can be shared.
   ∘ TB1 and TB2: TB parameters modulation and coding scheme, New data indicator and Redundancy version, FDRA, TDRA are shared between scheduled PDSCHs
   ∘ HARQ process number: this field can be shared when NW/gNB activate per-TB HARQ feedback using roughly the same mechanism as per-CBG HARQ. In other words, the multi-TB (like multi-CBG) is transmitted on a single HARQ process, UE 102 can feed back per-TB ACK/NACK (e.g., per-CBG ACK/NACK) and the gNB 114 can retransmit a subset of TBs (like retransmit a subset of CBGs).
- Control information in DCI field is separated field
   ∘ FDRA: This field can be separated for each scheduled PDSCH. DCI can use separated FDRA field for each scheduled PDSCH frequency-domain resource, or DCI can use a single FDRA field for scheduling multiple PDSCHs frequency-domain resources based on a look-up table. The entries in the look-up table can be configured by higher layer (e.g., RRC).
   ∘ TDRA: This field can be separated for each scheduled PDSCH. DCI can use separated TDRA field for each scheduled PDSCH time-domain resource, DCI can use a single TDRA field for scheduling multiple PDSCH time-domain resources. Some of its rows in the look-up table can contain multiple (e.g., two) *K*₀ values and multiple (e.g., two) SLIV values applied to PDSCH1 and PDSCH2, respectively.
   ∘ PDSCH-to-HARQ-timing-indicator: If this field is separated then it means that each scheduled PDSCH A/N feedback timing is not jointed, e.g., independent A/N feedback is used for each scheduled PDSCH.
   ∘ HARQ process number and DAI: for those DCI field which are related to HARQ process like HARQ process number and DAI cannot be shared. HARQ process number and DAI can use separated field for each scheduled PDSCH, or DCI can use a single field for scheduling multiple PDSCHs HARQ process number and DAI based on a look-up table. The entries in the look-up table can be configured by higher layer (e.g., RRC).
   ∘ Rate matching parameter: this field cannot be shared because the rate matching may vary from slots to slots.
   ∘ CBG transmission information (CBGTI) and CBG flushing out information field (CBGFI) cannot be shared.

If this single-to-multiple scheduling DCI format (e.g., DCI format 1_y) can schedule both a single PDSCH and multiple PDSCHs, then the number of PDCCH blind decoding per monitored unit (e.g., slot) will not increase for UE 102. For example, UE 102 can monitor the fallback DCI format 1_0 and DCI format 1_y in a search space associated with a CORESET.

The following methods can be considered for single-to-multiple scheduling DCI format (e.g., DCI format 1_y).

If the allocation length of PRB for a PDSCH in one of the separate FDRA field in DCI is equal to zero, then UE 102 can assume that corresponding PDSCH is not scheduled. FDRA can support Type 0, Type 1, and dynamic switch (switch between Type 0 and 1). For FDRA Type 0, it can be added as an "NULL" or "zero" allocation entry in the look-up table so when the value in FDRA DCI field points to the "zero" allocation entry in the look-up table then UE 102 can assume there is no allocation for this PDSCH.

If the time allocation symbol length for a PDSCH in one of the separate DCI field TDRA is equal to zero, then UE 102 can assume that corresponding PDSCH is not scheduled.

The following Table 3 is an exemplary design for the single-to-multiple scheduling DCI format (e.g., DCI format 1_y) for NR from 52.6 and above. In this example, ${N}_{PRB}^{BWP} = 275$ PRBs for a (configured) BWP may be assumed. Table 3 is an example of new DCI format for single-to-two scheduling for NR from 52.6 GHz and above, assume ${N}_{PRB}^{BWP} = 275$ PRBs.

**Table 3**

| **DCI fields of Format 1_y** | **Bit size of Format 1_y (bits)** | **Shared or Separated field** |
|---|---|---|
| Identifier for DCI formats | 1 | Shared |
| Carrier indicator | 0 or 3 | Shared |
| Bandwidth part indicator | 0 or 2 | Shared |
| Frequency domain resource assignment (FDRA) | < 10 | Shared or Separated |
| Time domain resource assignment (TDRA): *K*₀ and SLIV | 0 or < 4 | Shared or Separated |
| VRB-to-PRB mapping | 0 or 1 | Shared |
| PRB bundling size indicator | 0 or 1 | Separated |
| Rate matching indicator | 0 or 2 | Separated |
| ZP CSI-RS trigger | 0 or 2 | Shared |
| TB1: Modulation and coding scheme | 5 | Separated or shared |
| TB1: New data indicator | 1 | Separated or shared |
| TB1: Redundancy version | 2 | Separated or shared |
| TB2: Modulation and coding scheme | 5 | Separated or shared |
| TB2: New data indicator | 1 | Separated or shared |
| TB2: Redundancy version | 2 | Separated or shared |
| HARQ Process number | 4 | Separated or shared |
| Downlink assignment index (DAI) | 0, 2 or 4 | Separated |
| TPC command for scheduled PUCCH | 2 | Shared |
| PUCCH resource indicator | 3 | Shared |
| PDSCH-to-HARQ-timing-indicator: *K*₁ | 0 or < 3 | Shared or Separated |
| Antenna port(s) | 4, 5, or 6 | Shared |
| Transmission configuration indication (TCI) | 0 or < 3 | Shared |
| SRS request | 2 or 3 | Shared |
| CBG transmission information (CBGTI) | 0, 2, 4, 6, or 8 | Separated |
| CBG flushing out information (CBGFI) | 0 or 1 | Separated |
| DMRS sequence initialization | 1 | Shared |
| CRC | 24 | Shared |

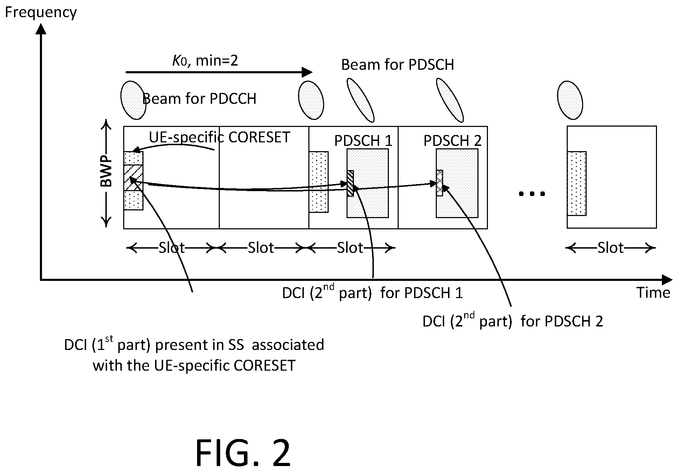

The second method for the single-to-multiple scheduling DCI format (e.g., format 1_z) to avoid overgrowth is that the control information can be divided into two parts. The first part of the control information is the critical demodulation information such as the time-frequency resource allocation information (e.g., FDRA, TDRA, rate matching parameter, etc.) and shared field like carrier indicator, BWP ID, etc. The second part of the control information which are not critical for the first stage decoding, such as HARQ process number, TB, CBG, etc., can be deferred to the remaining part of DCI. In addition, the time-frequency resource for the second part of the control information of the single-to-multiple scheduling DCI format (e.g., format 1_z) can be placed or piggybacked into the time-frequency resource of the each scheduled PDSCH, as shown in FIG. 2. This approach (two-stages) can reduce the DCI size, so there are several advantages like reducing BD the complexity and PDCCH blocking probability.

The time-frequency resource for the 2^{nd} part of the control information can be dependently allocated on the time-frequency resource of the scheduled PDSCH. The allocated resource for the 2^{nd} part of the control information can be based on a pre-defined rule specified in the spec. The 2^{nd} part of the control information can be independent coding and with its own modulation scheme (e.g., QPSK). The TCI state for the 2^{nd} part of the control information can be same with the simultaneous PDSCH as shown in FIG. 2. PDCCH may be multiplexed with the first DMRS for PDSCH for the demodulation of the 2^{nd} part of the control information. For multi-layers PDSCH transmission (e.g., two layers), based on the higher layer configuration: the 2^{nd} part PDCCH can be based on single layer transmission so it just need to use one of the antenna port for demodulation, or 2^{nd} part PDSCH is based on two layers transmission with the assumption of each layer of PDCCH being identical.

In FIG. 2, a single DCI schedule multiple (e.g., two) PDSCHs. The first part DCI information provides the time-frequency resource for each scheduled PDSCH. Therefore, UE 102 may know where to decode those scheduled PDSCHs, and the second part of the control information may be decoded later. For example, the 2^{nd} part DCI can be multiplexed with the 1^{st} DMRS symbol for PDSCH mapping type (e.g., type A). The starting location of 2^{nd} part DCI in time-frequency domain can be based on a pre-defined rule which can be specified in the specification. The 2^{nd} part DCI can use polar coding and the demodulation scheme can be default as QPSK.

The following Table 4 is an exemplary design for the 1^{st} part of the single-to-multiple scheduling DCI format (e.g., DCI format 1_z) for NR from 52.6 and above. In this example, ${N}_{PRB}^{BWP} = 275$ PRBs for a (configured) BWP it can be assumed. Table 4 is an example of the 1^{st} part control information for single-to-two scheduling DCI, assume ${N}_{PRB}^{BWP} = 275$ PRBs.

**Table 4**

| **DCI fields of Format 1_z (1^{st} part)** | **Bit size of Format 1_z (bits)** |
|---|---|
| Identifier for DCI formats | 1 |
| Carrier indicator | 0 or 3 |
| Bandwidth part indicator | 0 or 2 |
| Frequency domain resource assignment (FDRA) for PDSCH 1 | < 10 |
| Time domain resource assignment (TDRA): *K*₀ and SLIV for PDSCH 1 | 0 or < 4 |
| Frequency domain resource assignment (FDRA) for PDSCH 2 | < 10 |
| Time domain resource assignment (TDRA): *K*₀ and SLIV for PDSCH 2 | 0 or < 4 |
| VRB-to-PRB mapping for PDSCH 1 | 0 or 1 |
| PRB bundling size indicator for PDSCH 1 | 0 or 1 |
| Rate matching indicator for PDSCH 1 | 0 or 2 |
| VRB-to-PRB mapping for PDSCH 2 | 0 or 1 |
| PRB bundling size indicator for PDSCH 2 | 0 or 1 |
| Rate matching indicator for PDSCH 2 | 0 or 2 |
| ZP CSI-RS trigger | 0 or 2 |
| TPC command for scheduled PUCCH | 2 |
| PUCCH resource indicator | 3 |
| Antenna port(s) | 4, 5, or 6 |
| Transmission configuration indication (TCI) | 0 or < 3 |
| SRS request | 2 or 3 |
| DMRS sequence initialization | 1 |
| CRC | 24 |

The following Table 5 is an exemplary design for the 2^{nd} part of the single-to-multiple scheduling DCI format (e.g., DCI format 1_z) for NR from 52.6 and above. As shown in Table 5, only HARQ process number ID and CBG related information (note: CBG indication may be disabled) are in the 2^{nd} part of the single-to-multiple scheduling DCI format (e.g., DCI format 1_z) for each scheduled PDSCH. Table 5 is an example of the 2^{nd} part control information for single-to-two scheduling DCI, assume ${N}_{PRB}^{BWP} = 275$ PRBs.

**Table 5**

| **DCI fields of Format 1_z (2^{nd} part)** | **Bit size of Format 1_z (bits)** |
|---|---|
| TB1: Modulation and coding scheme | 5 |
| TB1: New data indicator | 1 |
| TB1: Redundancy version | 2 |
| TB2: Modulation and coding scheme | 5 |
| TB2: New data indicator | 1 |
| TB2: Redundancy version | 2 |
| HARQ Process number | 4 |
| Downlink assignment index (DAI) | 0, 2 or 4 |
| CBG transmission information (CBGTI) | 0, 2, 4, 6, or 8 |
| CBG flushing out information (CBGFI) | 0 or 1 |
| CRC | 24 |

The third method for single-to-multiple scheduling DCI format to avoid over certain bit size (e.g., 120 bits) is that the PDCCH can be placed or piggybacked in the scheduled PDSCH time-frequency resource for next scheduled PDSCH. Unlike the second method, the DCI information is split into two parts. Instead, only a single bit for "last package indicator" is introduced for a DCI format 1_0/1_1. In this way, the DCI size will not increase because it may use one of the reserved bits in DCI format 1_0/1_1 for the "last packet indicator". Since only a single bit is required for this method, hence, the legacy DCI format 1_0/1_1 can be reused.

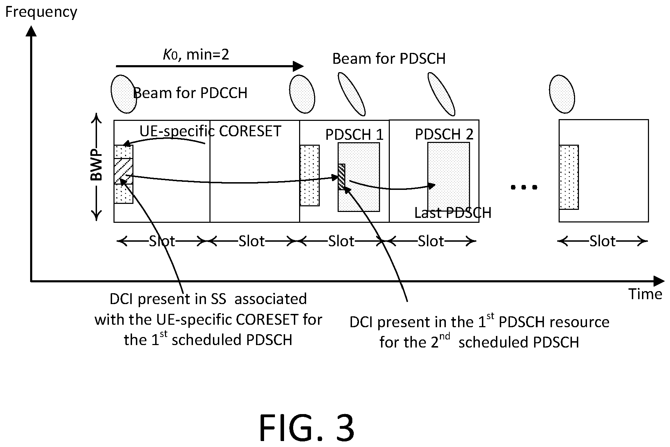

The maximum number of scheduled PDSCHs can be configured by the higher layer (e.g., RRC) parameter. Therefore, UE 102 knows the maximum number of the scheduled PDSCHs and (e.g., consecutive) slots by a single DCI when monitoring PDCCH. UE 102 may perform DCI in a search space associated with a CORESET for the first scheduled PDSCH. UE 102 may determine if there is more than one PDSCH will be scheduled via the last packet indicator in DCI format 1_0/1_1. If the value of the "last packet indicator" is set to one, then UE 102 may determine this is the last PDSCH. Otherwise, UE 102 decodes the PDCCH for the next scheduled PDSCH in time-frequency allocated resource of the scheduled PDSCH. The allocated resource for the PDCCH in the scheduled PDSCH time-frequency allocated resource may be based on a pre-defined rule specified in the standard specification. The PDCCH in the scheduled PDSCH's time-frequency allocated resource may use the same coding scheme (e.g., polar coding) and with its own modulation scheme (e.g., QPSK). The TCI state for the PDCCH in the time-frequency allocated resource of the scheduled PDSCH may be the same with the PDSCH, as shown in FIG. 3. The *K*₀ value in TDRA field for the PDCCH in time-frequency allocated resource of the scheduled PDSCH can be omitted. This is because the allocated slot/slots for the next scheduled PDSCH may be based on the higher layer (e.g., RRC) configuration. For example, the next scheduled PDSCH may be transmitted at the next consecutive slot. In addition, the maximum number of scheduled PDSCHs is configured by higher layer, therefore, UE 102 may determine the maximum number slots which will be allocated if there are multiple PDSCHs to be scheduled.

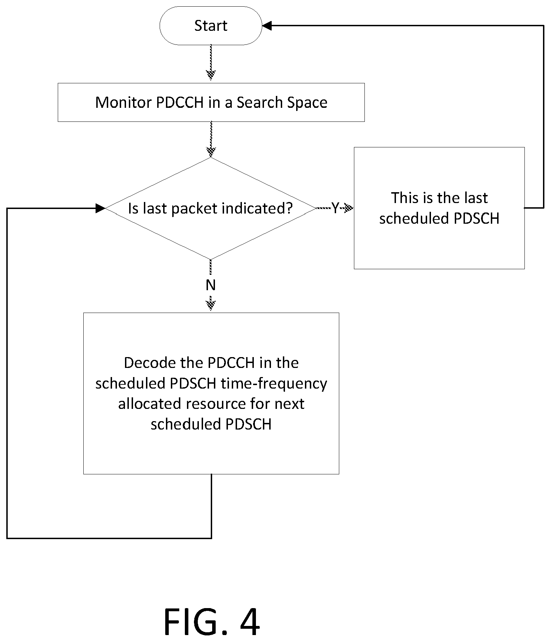

The UE procedure for handling the single DCI schedule multiple PDSCHs with "last packet indication" is captured in FIG. 4.

Table 6 is an exemplary design for the single-to-multiple scheduling DCI format (e.g., DCI format 1_1) with the disclosed bit field "last packet indicator" for NR from 52.6 and above. In this example, ${N}_{PRB}^{BWP} = 275$ PRBs for a (configured) BWP can be assumed, single TB, and single beam configuration (e.g., single TCI state). Table 6 is an example of the control information for single-to-multiple scheduling DCI, assume ${N}_{PRB}^{BWP} = 275$ PRBs, single TB, or single TCI state.

**Table 6**

| **DCI fields of Format 1_1** | **Bit size of Format 1_1 (bits)** |
|---|---|
| Identifier for DCI formats | 1 |
| Carrier indicator | 0 or 3 |
| Bandwidth part indicator | 0 or 2 |
| Last packet indicator | 1 (1 = this is the last PDSCH) |
| Frequency domain resource assignment (FDRA) | < 10 |
| Time domain resource assignment (TDRA): *K*₀ and SLIV | 0 or < 4 |
| VRB-to-PRB mapping | 0 or 1 |
| PRB bundling size indicator | 0 or 1 |
| Rate matching indicator | 0 or 2 |
| ZP CSI-RS trigger | 0 or 2 |
| TB1: Modulation and coding scheme | 5 |
| TB1: New data indicator | 1 |
| TB1: Redundancy version | 2 |
| HARQ Process number | 4 |
| Downlink assignment index (DAI) | 0, 2 or 4 |
| TPC command for scheduled PUCCH | 2 |
| PUCCH resource indicator | 3 |
| Antenna port(s) | 4, 5, or 6 |
| Transmission configuration indication (TCI) | 0 or < 3 |
| SRS request | 2 or 3 |
| DMRS sequence initialization | 1 |
| CBG transmission information (CBGTI) | 0, 2, 4, 6, or 8 |
| CBG flushing out information (CBGFI) | 0 or 1 |
| CRC | 24 |

### Single DCI schedule multiple PDSCHs across component carriers

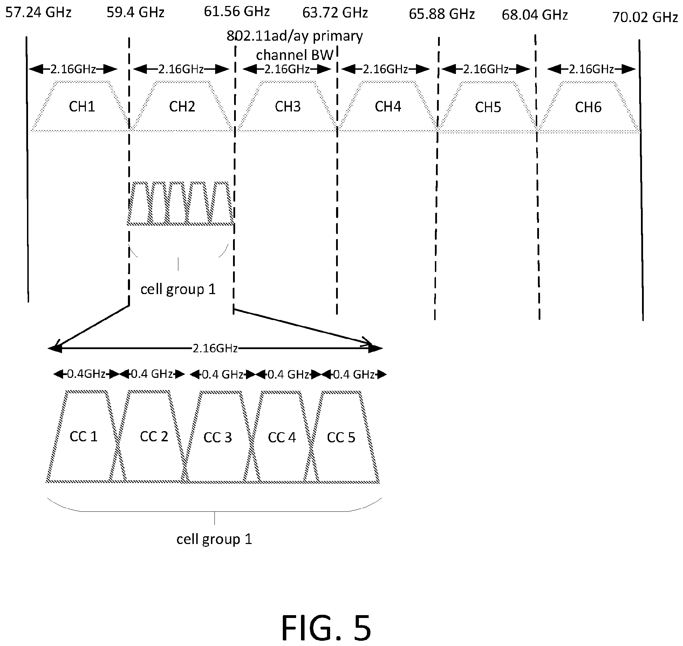

A single DCI schedules multiple PDSCH across component carriers is one of the study items (SI) in Rel-17. In this SI, it targets to the dynamic spectrum sharing (DSS, e.g., NR and LTE spectrum sharing) in the frequency range 1 (FR1) application and it limits the maximum number of scheduled CC(s) as two. However, the scope of this SI does not consider some properties like larger SCS/numerologies, much wider bandwidth, etc. for NR from 52.6 GHz and above. For example, as shown in FIG. 5, UE 102 may be configured with a cell group (intra-band CA) with the aggregated channel bandwidth *B* = 2.16 GHz as shown in FIG. 5. In FIG. 5, five intra-band component carriers (CCs)/cells are aggregated in a WiFi 802.11ad/ay channel. Each CC's channel BW is configured as 400 MHz with *µ* = 3/SCS = 120 KHz. The aggregated CCs are within a frequency range of WiFi 802.11 ad/ay channel number 2 from 59.4 GHz to 61.56 GHz. The number of intra-band CA in a WiFi channel from 52.6 GHz to 71 GHz may be far exceed two CCs. Therefore, some enhancement for single DCI schedule multiple PDSCHs across CC(s) for NR from 52.6 and above is disclosed.

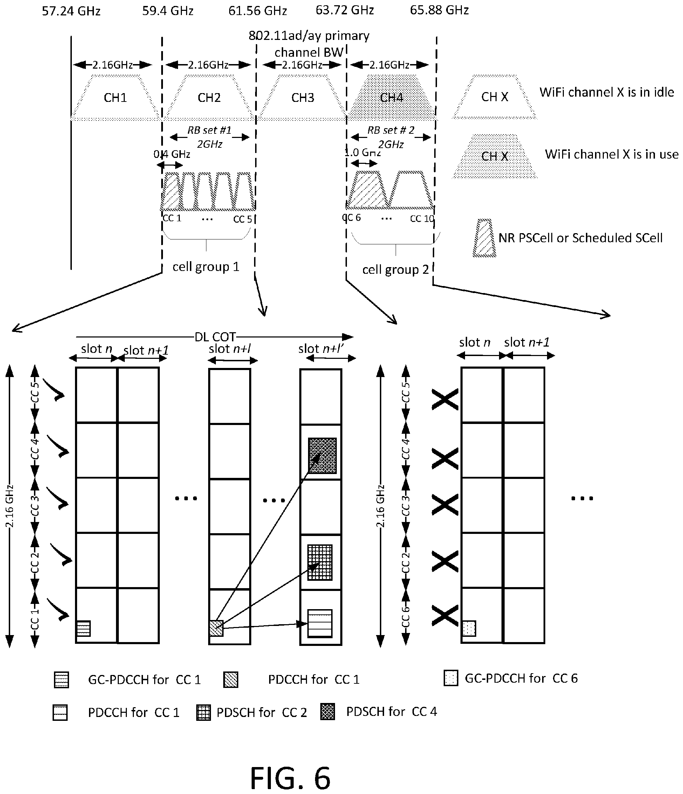

Similar to the case that a single DCI scheduling multiple PDSCHs in a serving cell, there are several advantages to introduce a single DCI format scheduling multiple PDSCHs for NR from 52.6 GHz and above. The major reason may be to enhance the scheduling flexible because less DCIs are transmitted, and slots duration is getting small for NR from 52.6 GHz and above. One example of a single DCI scheduling multiple PDSCH across multiple CCs are shown in FIG. 6. With reference to FIG. 6, it may be assumed there are 5 CCs are carrier aggregated in the cell group 1 and 2 CCs are carrier aggregated in the cell group 2. For example, when gNB 114 signals the COT and LBT results to UE 102 for cell group 1 and 2, UE 102 may only monitor PDCCH in the CC 1, e.g., the CC1 is in the cell group 1, thus UE 102 does not need to monitor other CCs for PDCCH in the same cell group thus it can save power consumption. When there is a single PDCCH are transmitted in CC1, UE 102 can decode the CC1 in a search space associated with a UE-specific CORESET in a BWP. The example as shown in FIG. 6, a single PDCCH schedules multiple (e.g., three) PDSCHs (e.g., PDSCH 1 for CC1, PDSCH 2 for CC2, and PDSCH 3 for CC4) at a COT sharing duration. SCell (e.g., CC 2, CC 3, CC 4, and CC 5) does not need to monitor PDCCH even at the COT sharing period. Therefore, a single DCI schedules multiple PDSCH can further save UE power consumption even UE 102 is in the COT sharing duration. One thing is worth to note that a single DCI schedule multiple PDSCHs across CCs is not impact by whether support of listen-before-talk (LBT) or not. With the support of LBT, UE 102 may know which WiFi channel is available or not. The example as shown in FIG. 6, two cell groups are configured for UE 102, cell group 1 is in WiFi 802.11 ad/ay channel number 2 and the other cell group is in WiFi channel number 4. At a timeslot, gNB 114 indicates that channel number 4 is not available due to the LBT result. Therefore, with the LBT, UE 102 can save more power to avoid unnecessary PDCCH monitoring.

It may be a challenge for a single DCI scheduling more than two PDSCHs. One of the maj or reasons may be that the DCI size for scheduling more than 2 PDSCHs may grow too large (e.g., > 120 bits) if without a proper design. However, due to the wideband property and support numerologies for NR from 52.6 GHz to 71 GHz, the probability for more than two aggregated CCs is very high. Therefore, a single DCI scheduling more than two PDSCHs can be considered for NR from 52.6 GHz and above. On the other hand, when the size of single DCI for scheduling multiple PDSCHs is over a limitation, and it may cause high PDCCH blockage or degrade the PDCCH performance. For NR from 52.6 GHz and above, most of spectrum is allocated for unlicensed band. Therefore, the disclosed method for the single DCI scheduling multiple PDSCH across multiple CCs can support both license and unlicensed frequency band for NR from 52.6 GHz and above.

The disclosed method for the single DCI scheduling multiple PDSCH across multiple CCs may be summarized as follows:
To avoid excessive DCI size, the control information in DCI may split as two parts, the first part control information includes the time-frequency resource for each scheduled PDSCH. Therefore, UE 102 knows where to decode those scheduled PDSCHs, and the second part of the control information may include the HARQ process number, modulation order, CBG information, or the like.

The time-frequency resource for the 2^{nd} part of the control information can be dependently allocated on the time-frequency resource of the scheduled PDSCH in a BWP. The 2^{nd} part of the control information can be independent coding and with its own modulation scheme (e.g., QPSK).

There is no need to perform PDCCH monitoring for SCell. The PDSCH reception's BWP for SCell may be configured by RRC and MAC-CE can activate or switch the BWP for SCell if necessary. The BWP ID in the 1^{st} part of the single DCI is the BWP ID for the scheduled cell (e.g., PSCell or PCell).

TCI state apply for aggregated CCs. Therefore, one TCI value can be shared for aggregated CCs.

If TDRA field is shared for aggregated CCs, then the same value *K*₀ and SLIV are applied for CCs. Note: the numerology for the BWP in SCell may be different from the BWP used in the scheduled cell (e.g., PCell or PSCell). In this case, the *K*₀ value may be adjusted by the specification in Rel-15, e.g., *K*₀ value can be adjusted with the offset $\left⌊\frac{{2}^{μ PDSCH}}{{2}^{μ PDCCH}}\right⌋$.

For unlicensed spectrum, disclosed herein is that UE 102 may be configured with multiple cell groups and a cell group can be associated with a WiFi 802.11 ad/ay channel number as shown in FIG. 6. Within a cell group, multiple CCs can be intra-band carrier aggregation. In this case, the carrier indication in DCI can be used for indication of the cell group ID instead the cell ID in a same group. If there are more than one scheduled CC within a WiFi channel bandwidth (e.g., 2.16 GHz).

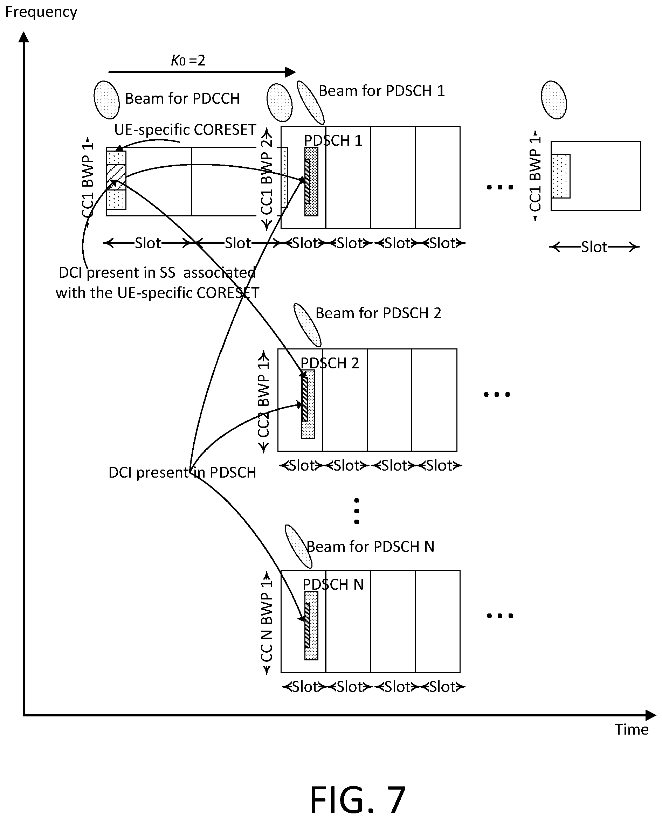

An exemplary design for a single DCI scheduling multiple PDSCHs across CCs shown in FIG. 7. In FIG. 7, a single DCI can schedule multiple *N* (e.g., *N*=4) PDSCH for *N* (e.g., *N=*4) CC carrier aggregation. TCI state may be applied for CCs and SCell does not need to monitor PDCCH, therefore, it reduces the PDCCH BD effort at each CC thus power consumption for UE 102 may be reduced.

Table 7 is an exemplary design for the 1^{st} part of the single-to-multiple scheduling DCI format (e.g., DCI format 1_z) across CCs for NR from 52.6 and above. In this example, ${N}_{PRB}^{BWP} = 275$ PRBs for a (configured) BWP, single TB, and single beam configuration (e.g., single TCI state) may be assumed. Table 7 is an example of the control information for single-to-multiple scheduling DCI (1^{st} part) across CCs, assume ${N}_{PRB}^{BWP} = 275$ PRBs.

**Table 7**

| **DCI fields of Format 1_z** | **Bit size of Format 1_z (bits)** | **Shared or Separated field** |
|---|---|---|
| Identifier for DCI formats | 1 | Shared |
| Carrier (group) indicator | 0 or 3 | Shared |
| Bandwidth part indicator | 0 or 2 | Shared |
| Frequency domain resource assignment (FDRA) | < 10 | Separated |
| Time domain resource assignment (TDRA): *K*₀ and SLIV | 0 or < 4 | Shared |
| VRB-to-PRB mapping | 0 or 1 | Shared |
| PRB bundling size indicator | 0 or 1 | Separated |
| Rate matching indicator | 0 or 2 | Separated |
| ZP CSI-RS trigger | 0 or 2 | Shared |
| TPC command for scheduled PUCCH | 2 | Shared |
| PUCCH resource indicator | 3 | Shared |
| PDSCH-to-HARQ-timing-indicator: *K*₁ | 0 or < 3 | Shared |
| Antenna port(s) | 4, 5, or 6 | Shared |
| Transmission configuration indication (TCI) | 0 or < 3 | Shared |
| SRS request | 2 or 3 | Shared |
| DMRS sequence initialization | 1 | Shared |
| CRC | 24 | |

### PDCCH monitoring unit for NR form 52.6 GHz and above

Due to the limited PDCCH processing capability, the number of monitored PDCCH candidates and the number of non-overlapped CCE per slot are expected to be decreased for the higher SCSs/numerologies (e.g., SCS = 480 KHz, 960 KHz, etc.). To meet the scheduling requirement as the lower SCSs/numerologies, one possible way is to configure a SS in a CORESET associated with a BWP to monitor PDCCH in every slot. However, this kind of configuration may consume significant power for UE 102, especially with the higher SCSs/numerologies.

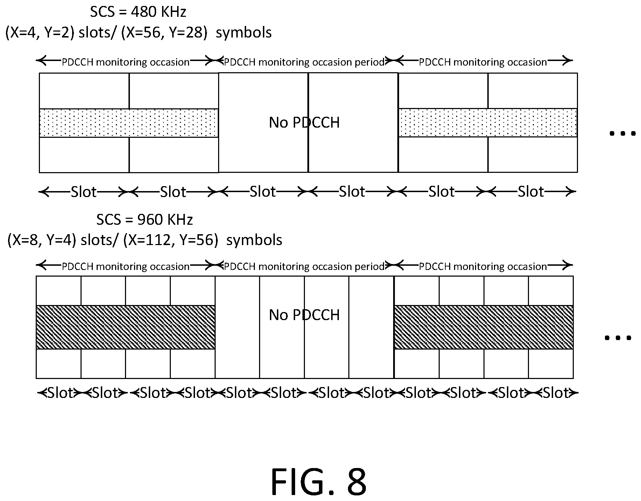

Like Rel-16 URLLC PDCCH monitoring span (X, Y) definition, it can be extended to the mobile broadband (EMBB) service for NR from 52.6 GHz and above with few modifications. The PDCCH monitoring span (X, Y) for higher SCS/numerology (e.g., SCS of 480 kHz and 960 kHz) where the first number X is the number of slots between the beginning of two consecutive monitoring occasions, the second number Y is the number of slots or symbols needs to be monitored in a monitoring occasion. Unlike Rel-16 PDCCH/DCI span, it supports limited span like (X, Y) = (2, 2), (4, 3), and (7, 3). Note in Rel-16, the value of X and Y is based on units of symbols. Therefore, the X and Y supported in Rel-16 is too small for NR from 52.6 GHz and above. For NR from 52.6 GHz and above, the duration per span needs to be across several slots to meet the scheduling requirement due to the number of PDCCH candidate and nonoverlapping CCEs being reduced per slot. UE 102 may be configured by gNB 114 to monitor PDCCH for the maximum number of PDCCH candidates and nonoverlapping CCEs defined per slot as in NR Rel-15/16 or defined per span for the maximum number of PDCCH candidates and non-overlapping CCEs defined per span. An example of a PDCCH monitoring span shown in FIG. 8. In FIG. 8, two configurations of PDCCH monitoring span for SCS = 480 and 960 KHz, respectively can be assumed. For 480 Hz, (X=4, Y=2) per span is configured, note the unit for X and Y is based on slot (note: if the unit of X and Y is based on symbols then X=56, Y=28). For this case, it means there are PDCCHs need to be monitored in Y=2 slots/28 symbols duration and each PDCCH monitoring occasion are separated by X=4 slots/or 56 symbols.

### PDCCH coverage enhancement for NR from 52.6 GHz and above

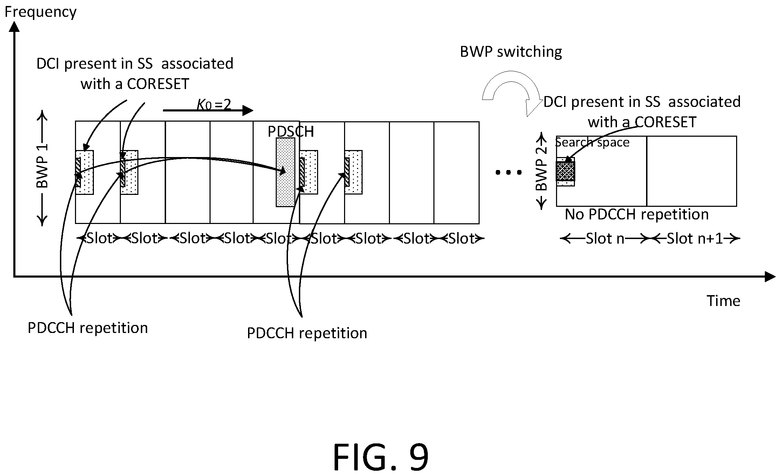

There are several methods can enhance PDCCH coverage for NR from 52.6 GHz and above. The first method may reduce the DCI size which has been introduced herein. The second method may support PDCCH repetition for NR from 52.6 GHz and above. The support of PDCCH repetition can be dependent on SCSs/numerologies (e.g., SCS = 480 KHz, 960 KHz, etc.). The configuration of PDCCH repetition may be based on pre-defined specification or higher layer (e.g., RRC) configuration. The configuration can include the time-domain repetition pattern (e.g., the repetition for certain slots, number of repetitions, etc.). In addition, the number of PDCCH repetitions can be dependent on the configuration for a search space (SS) associated with a CORESET in a BWP. It means PDCCH repetition can be enabled/disabled via BWP switching or SS switching even when the BWP is configured with larger SCSs/numerologies (e.g., SCS = 480 KHz, 960 KHz, etc.). The *K*₀ value can be calculated from the last repeated PDCCH. In FIG. 9, an example is shown of PDCCH repetition for NR from 52.6 GHz and above. In this example shown in FIG. 9, the PDCCH repetition pattern is configurable by RRC with 2 slots for a BWP and it may be activated/deactivated by BWP or SS switching.

### TCI state and beam switching consideration

In this section, issue statement 2 is addressed. The below subject matter may address a single DCI scheduling multiple different PDSCHs from a serving cell with multiple TRP transmission. In addition, disclosed herein is that the gap symbol is required for the higher SCS (e.g., 960 KHz).

For single DCI scheduling multiple PDSCH(s) with different (e.g., two) TCI states from multiple TRP (M-TRP) for a serving cell. TCI state in DCI field includes the non-zero power CSI-RS resource ID (NZP-CSI-RS ID), SSB index, or SRS resource ID (SRS ID).

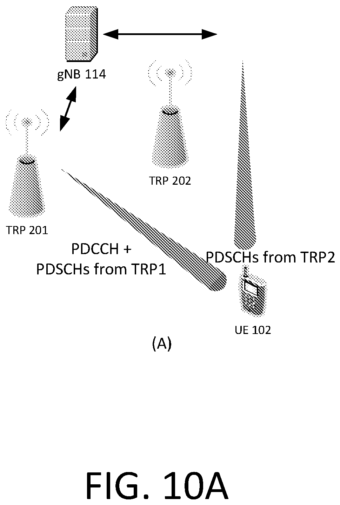

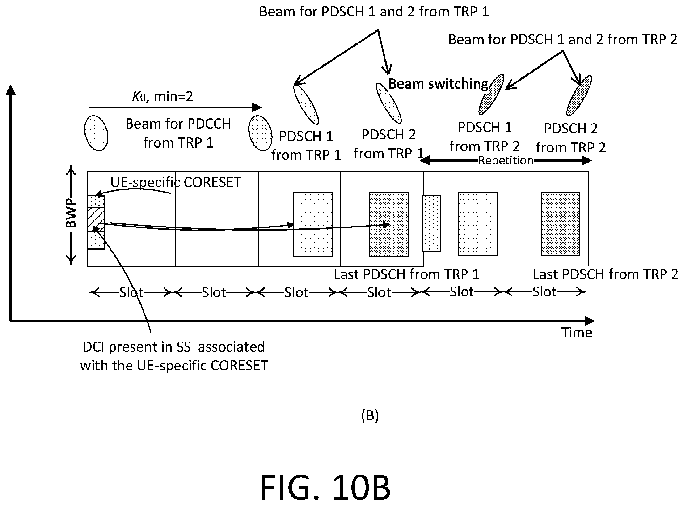

Similar to Rel-16, UE 102 can receive a single DCI scheduling multiple PDSCHs from multiple TRPs (e.g., when the backhaul is ideal) as shown in FIG. 10A. In this case, UE 102 may receive two TCI states in a single DCI from one of the TRPs (e.g., TRP 201) for joint-scheduling multiple PDSCHs. In Rel-16, those multiple PDSCHs from different TRP are for a same TB, therefore, in this case, UE 102 can softly combine two received PDSCHs for a same TB. Here, we further consider a case which a single DCI can schedule multiple PDSCHs for different TBs as introduced herein from a TRP (e.g., TRP 201) plus it can joint schedule multiple PDSCHs from the other TRP (e.g., TRP 202). Note, those scheduled multiple PDSCHs from TRP 202 are transmitting the same TB as TRP 201. Therefore, UE 102 still can softly combine received PDSCHs from multiple TRPs for same TB. For another example, as shown in FIG. 10B, a single DCI jointly schedule two PDSCHs (e.g., PDSCH 1 and PDSCH 2 from TRP 201) for two different TBs and schedule two PDSCHs (e.g., PDSCH 1 and PDSCH 2 from TRP 202). Depending on the UE's capability, UE 102 may expect to receive multiple PDSCHs from the multiple TRPs which may be based on the time-domain multiplexing (TDM) frequency-domain multiplexing (FDM) or spatial-domain multiplexing (SDM). If the scheduled multiple PDSCHs from multiple TRPs is based on TDM, then UE 102 may expect multiple PSDCHs in the order from TRP 201 then follow by TRP 202 as shown in FIG. 10B. If UE 102 receives two TCIs state in a single DCI and RRC parameter *PDSCH- TimeDomainResourceAllocation* is configured for two TCI reception, then UE 102 can apply the first TCI state (e.g., spatial information 1) for the first TRP (TRP 201) and the second TCI state for the second TRP (TRP 202). These two TCI states are ordered (1st TCI state and 2nd TCI state) and signaled to UE 102 in that order (1st TCI state and 2nd TCI state) based on the activation MAC-CE.

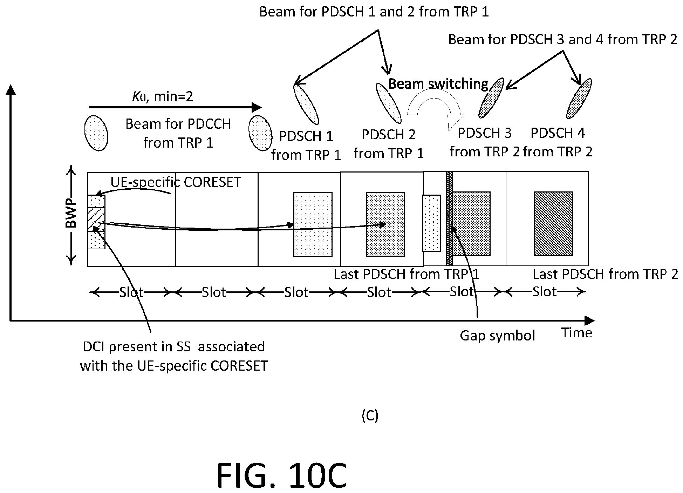

Due to the short symbol duration for larger SCS/numerology (e.g., SCS = 960 KHz) shown in Table 1, the cyclic prefix (CP) duration (e.g., the CP duration for SCS = 960 is 72 ns) is shorter than the beam switching time (e.g., 90 ns). In this case, the gap symbol between the adjacent slots (intra-slot) or within a slot as shown in FIG. 10C is required for beam switching. Therefore, gap symbol(s) may need to be considered for RRC parameter *PDSCH-TimeDomainResourceAllocation* when the CP duration is less than beam switching time.

For a single DCI scheduling multiple PDSCH(s) across component carriers (CC) with multiple TRP transmission, if UE 102 receive 2 TCI and PDSCH time-domain resource indicates M-TRP transmission then the first TCI state map for those PDSCHs transmitted from TRP 201 and the 2^{nd} TCI state map for those PDSCHs transmitted from TRP 202.

### PDCCH monitoring span

For NR 52.6 GHz and above, PDCCH monitoring span (X, Y) discloses where X is the number of slots between the beginning of two consecutive monitoring occasions, the second number Y is the number of slots or symbols that may need to be monitored in a monitoring occasion. For NR from 52.6 GHz and above, the duration per PDCCH monitoring span may be across several slots (or symbols) to meet the scheduling requirement due to the (maximum) number of PDCCH candidate and nonoverlapping CCEs being reduced per slot. For NR 52.6 GHz and above, PDCCH monitoring span starts at a first symbol where a PDCCH monitoring occasion starts and ends at a last symbol where a PDCCH monitoring occasion ends, where the number of symbols of the span is up to Y slots. The starting slot for a PDCCH monitoring span (or the start of a PDCCH monitoring span) can be configured by higher layer signaling/parameters (e.g., RRC).

UE 102 can be configured by gNB 114 to monitor PDCCH for the maximum number of PDCCH candidates ( ${M}_{PDCCH}^{max , span , μ}$) and nonoverlapping CCEs ( ${C}_{PDCCH}^{max , span , μ}$) defined per span. In each PDCCH monitoring span, the number of PDCCH candidates and nonoverlapping CCE cannot exceed the UE capability. Therefore, UE behavior can be like legacy NR specification even when there is an overbooking. For example, UE 102 and gNB 114 can map PDCCH candidates in each PDCCH monitoring span as the following mapping rules in legacy NR specification: (1) common search space (CSS) sets are mapped before UE specific search space (USS) sets; (2) USS sets are mapped in ascending order of the search space (SS) set indices, and if the number of PDCCH candidates/CCEs exceeds UE 102 processing limits, etc.

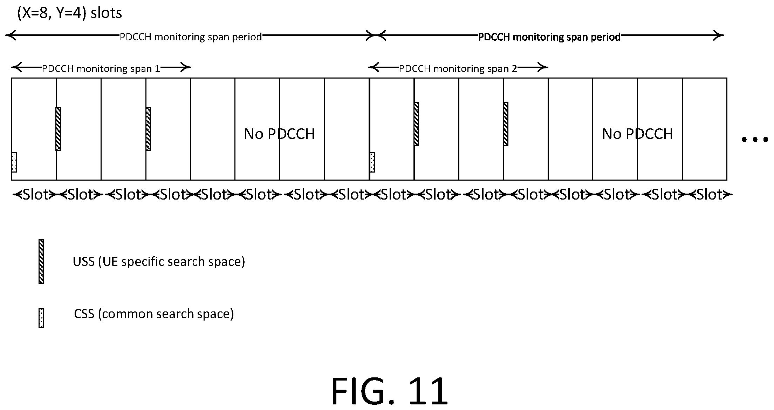

UE 102 may not need to monitor every slot in a PDCCH monitoring span. The network may configure some of slots within a PDCCH monitoring span for UE 102. According to the disclosed PDCCH monitoring span (X, Y) definition, UE 102 may need to continuously monitor up to Y slots for PDCCH monitoring. However, the network may only configure certain slots for PDCCH monitoring within a span for UE 102. For example, let a PDCCH monitoring span (X, Y) where X = 8 and Y = 4, as shown in FIG. 11. In this example, UE 102 may be configured with two USS (associated with a CORESET) and one CSS within a PDCCH monitoring span.

The time-frequency resources of search space (e.g., USS or CSS) within a PDCCH monitoring span can be based on the following methods: The search space reuse Rel-15/16 search space configuration (e.g., *monitoringSlotperiodicityAndOffset*) defined in PDCCH-config. Like the periodicity of search space of PDCCH monitoring used as Rel-15/16, the search space monitoring periodicity (for a cell) can be set to be equal to or larger than the value of *X* for one or more of the multiple combinations (X, Y). For example, let a PDCCH monitoring span (X, Y) where X = 8 and Y = 4; the search space monitoring periodicity can be set as multiple integers of X (e.g., 8). For search space (sets) in slot *n* within a span, a set of CSS sets and a set of USS sets, the location of CSS and USS sets is according to an ascending order of the search space set index.

If a single DCI schedules multi-PDSCH in a PDCCH monitoring span which indicates BWP change for a scheduled cell, then UE 102 can assume that there is no other DCI for the serving cell in the same PDCCH monitoring span will be allowed to indicate BWP change.

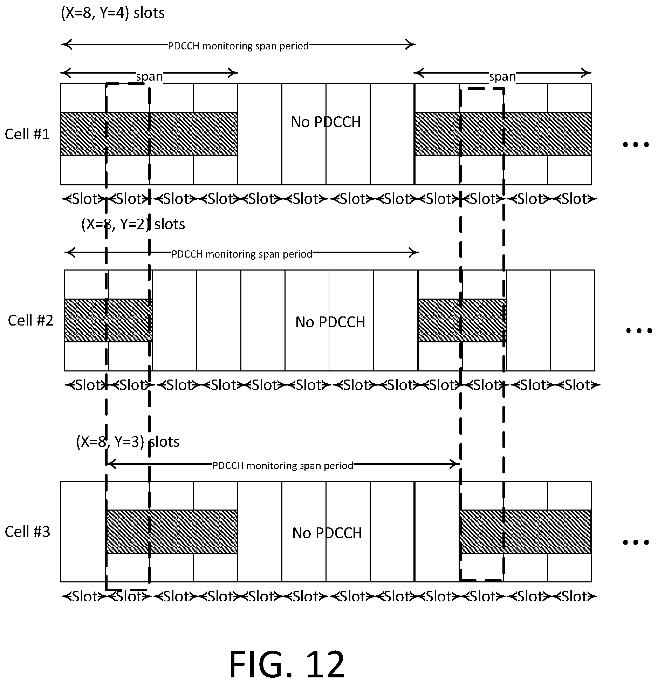

UE 102 may create the union of the PDCCH monitoring span (X, Y) from multiple scheduling cells (carrier aggregation) and the starting slot of any span from each scheduling cell may be the same or different. To avoid overbooking when the number of scheduling cells (e.g., carrier aggregation) is greater than one, UE 102 may calculate the maximum number of monitoring PDCCH(s) per slot across the spans from multiple scheduling cells. For example, if the starting slot for two or more PDCCH monitoring spans and each span (X, Y) from each scheduling cell are the same, then it can be referred to as aligned PDCCH monitoring span set across multiple scheduling cells, otherwise, it can be referred to as non-aligned PDCCH monitoring span set. For aligned or non-aligned span (set) case, UE 102 may calculate the maximum number of PDCCH that needs to be monitored per slot across the spans from multiple scheduling cells and use this number for BD/CCE limitations to avoid overbooking. For an example as shown in FIG. 12, three PDCCH monitoring spans from three scheduling cells can be considered as combinations of (X, Y) and the starting slot of PDCCH monitoring span from the scheduling cell #1, #2 are same but the starting slot of PDCCH monitoring span from the scheduling cell #3 is different than cell #1 and #2. UE 102 may calculate the maximum number PDCCHs (or DCI) to be monitored per slot as for BD/CCE limitations to avoid overbooking (e.g., the maximum number of PDCCHs (or DCI) needs to be monitored across scheduling frequency resources in the same time unit (slot)). As shown in FIG. 12, the maximum number of PDSCHs should be monitored across scheduling cells (cell #1, #2 and #3) happens at the 2^{nd} slot in the PDCCH monitoring span of cell #1, #2 and the 1^{st} slot in the PDCCH monitoring span of cell #3.

In NR Rel-15/16, PDCCH-ConfigCommon is used mainly to configure various common search space, such as search space for system information, paging, etc. The disclosed PDCCH monitoring span (X, Y) also can be applied to PDCCH-ConfigCommon as PDCCH-Config. In this way, UE 102 only monitors various common PDCCH within a PDCCH monitoring span.

### Counter DAI for Single DCI scheduling multiple PDSCH(s)

When a single DCI schedules multiple PDSCH(s), the counter DAI and total DAI in DCI format (e.g., format 1_1) for Type-2 HARQ-ACK (dynamic) codebook generation can be based on the following rules. A first rule with regard to a single field for both counter DAI and total DAI in the DCI scheduling multi-PDSCH format (e.g., DCI format 1_1). Therefore, DAI bit width can be same as legacy DCI schedule single PDSCH. A second rule with regard to the value of the counter DAI in single DCI scheduling multi-PDSCH format is indicated for the 1^{st} scheduled PDSCH in a scheduled cell. The ordering of the PDSCHs for counter DAI is disclosed as follows: the counter DAI value can be incremented by one for each scheduled PDSCH (for the first TB and assume there is no multiple TB bundling) along with scheduling cell and then for the next scheduled PDSCH in next (time-domain) slot when there is no time-domain bundling, here, the time-domain bundling refers to bundle the HARQ-ACK from contiguous scheduled PDSCH(s) in time-domain (e.g., contiguous slots). A third rule with regard to when time-domain bundling is configured, the counter DAI is incremented by one with N contiguous scheduled PDSCHs in time-domain slots (e.g., assume each scheduled TB is scheduled in a slot) then following scheduling cells. The bundling value N can be signaling via higher layer (e.g., RRC) in PDSCH-config. Since multiple scheduled PDSCH may not be scheduled in contiguous slots and each PDSCH is scheduled within a slot. If there is at least one PDSCH is scheduled in N contiguous slots, then the counter DAI is incremented by one in this case.

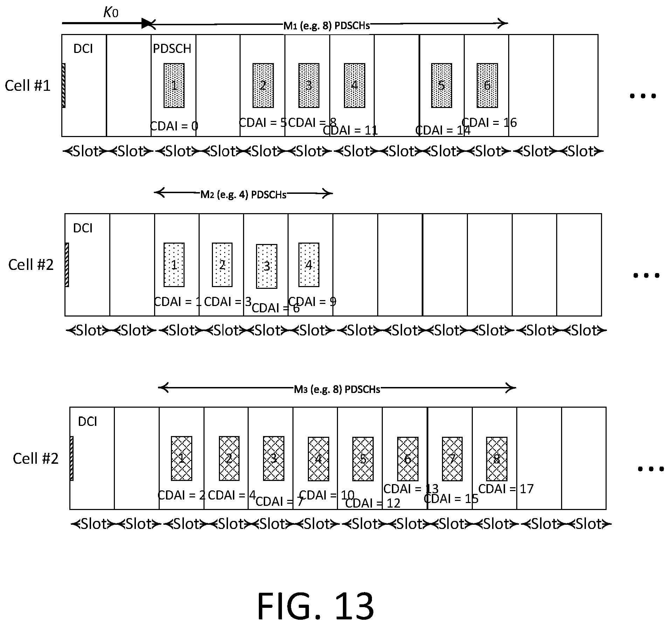

For example, UE 102 may be scheduled with three cells (or carriers) and a single DCI may schedule up to M (e.g., M=8) multiple PDSCHs as shown in FIG. 13. If there is no time-domain bundling, then counter DAI can be incremented by one for each scheduled PDSCH. The counter DAI is signaled for the first scheduled PDSCH and UE 102 can figure out the rest of value of counter DAI. This is because UE 102 can know the number scheduled via DCI (e.g., the number of valid fields in TDRA). In FIG. 13, first cell (e.g., primary cell) is scheduled with 6 PDSCHs, second cell (e.g., secondary cell) is scheduled with 4 PDSCHs and the third cell is scheduled with 8 PDSCHs. Note, the number of scheduled PDSCHs can be indicated from the valid rows in TDRA field. In this case, a type 2 HARQ-ACK (dynamic) codebook can be generated by the disclosed rules. Here, the TDAI in DCI field is defined as the number of scheduled PDSCH in a scheduled cell. Therefore, the total TDAI is sum of scheduled cells. UE 102 received the counter DAI (CDAI) is indicated as 0 for the first scheduled PDSCH in the first scheduled cell, CDAI = 1 for the 1^{st} scheduled PDSCH in the 2^{nd} scheduled cell, and CDAI = 2 for the 1^{st} scheduled PDSCH in the third cell. UE 102 may obtain the total number of scheduled multi-PDSCH for each cell (e.g., M₁, M₂ and M₃ scheduled PDSCH(s) for cell #1, #2 and #3).

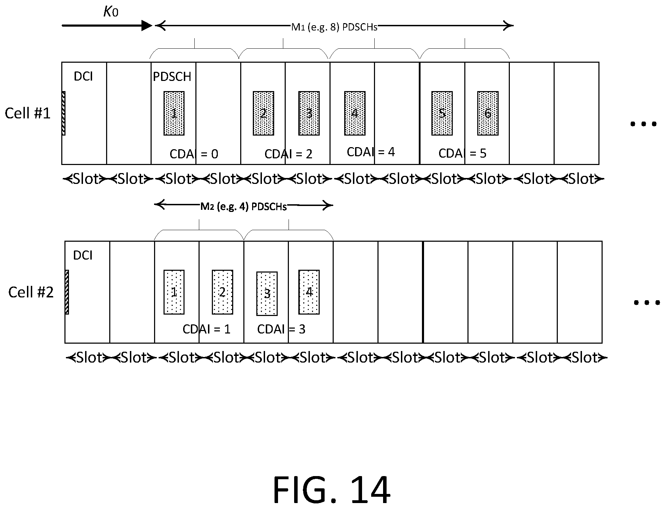

When time-domain bundling is enabled, the counter DAI is incremented by one with N contiguous scheduled PDSCHs. This rule for value of counter DAI is also apply for non-contiguous scheduled PDSCH within N contiguous scheduled PDSCHs (or slots). In FIG. 14, two cells are scheduled, each cell is scheduled up to M (e.g., 8) PDSCHs and N (e.g., 2) contiguous PDSCHs are bundled. In FIG. 14, first cell (e.g., primary cell) is scheduled with 6 PDSCHs and second cell (e.g., secondary cell) is scheduled with 4 PDSCHs, respectively. In this case, a type 2 HARQ-ACK (dynamic) codebook can be generated by the disclosed rules with bundling. First, UE 102 received the counter DAI (CDAI) is indicated as 0 for the first N (e.g., N = 2) scheduled PDSCH in the first scheduled cell, and CDAI = 1 for the 1^{st} scheduled PDSCH in the 2^{nd} scheduled cell. UE 102 may obtain the total number of scheduled multi-PDSCH for each cell (e.g., M₁, and M₂ scheduled PDSCH(s) for cell #1 and #2).

### Multi-TCI state occurs at a slot during a single DCI scheduling multiple PDSCH(s)

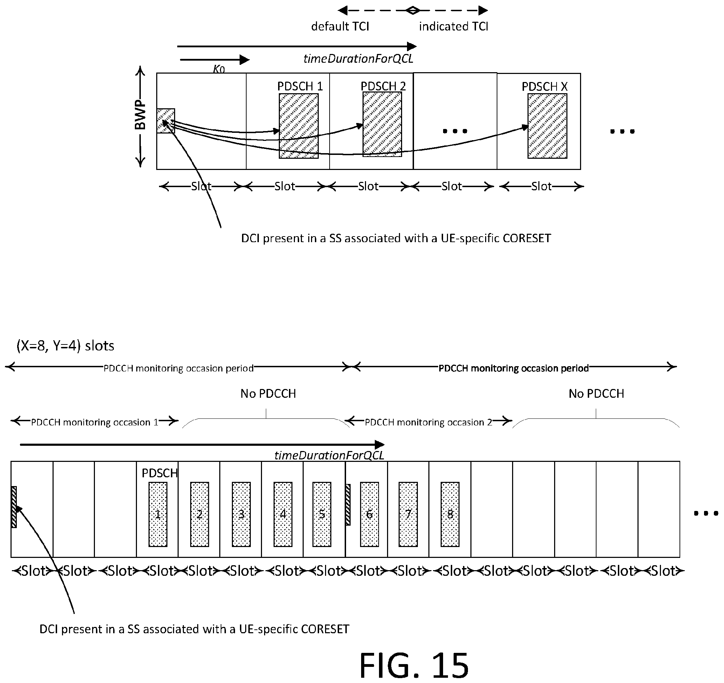

A single DCI schedule multi-PDSCH scenario is considered where another search space is configured within *timeDurationForQCL* as shown in FIG. 15. In FIG. 15, a SS (e.g., USS) is associated with a CORESET that schedules M (e.g., M = 8) PDSCHs and PDCCH monitoring span is set as (X=8, Y=4). In this example, another PDCCH monitoring occasion defined by the other search space set(s) is within the duration of scheduled multi-PDSCH and the duration of *timeDurationForQCL.* If the QCL assumption (e.g., based on the lowest CORESET ID) for another PDCCH monitoring occasion is different than the default TCI state for scheduled multi-PDSCH, then UE 102 may encounter more than one TCI states in the same slot. This kind of fast beam switching from DCI to scheduled PDSCH may not be feasible for some UEs. Therefore, the following UE behavior options are disclosed to handle this scenario.

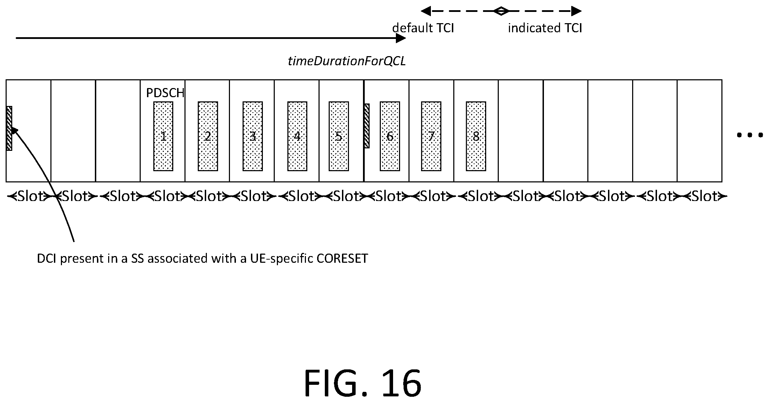

Option 1: if default TCI state is applied for scheduled PDSCHs, then UE 102 may assume that the same QCL assumption (e.g., default TCI state) is applied for the DCI in another PDCCH monitoring occasion. The indicated TCI state is applied after the end of scheduled PDSCH. UE 102 may assume that the default DCI is applied for the PDCCH associated with different TCI state (e.g., the QCL assumption of the lowest CORESET ID) during the multi-PDSCH period. FIG. 16 demonstrates the TCI state operation for Option 1.

Option 2: If the time between single DCI and scheduled multi-PDSCH with single TRP transmission is shorter than *timeDurationForQCL,* then some of the scheduled PDSCHs may have scheduling offset less than *timeDurationForQCL* as shown in FIG. 15. In this case, TCI state (or beam) switching may occur during the scheduled multiple PDSCHs. Disclosed option 2 is that the UE 102 can apply the indicated TCI state for those PDSCHs having scheduling offset equal to or greater than *timeDurationForQCL.* In this option 2, the default TCI state or indicated TCI state may be applied for another DCI associated with different QCL assumption indicated during the scheduled multi-PDSCH period. If another DCI is occurred within *timeDurationForQCL* then default TCI state is applied for another DCI associated with different QCL assumption, otherwise, the indicated TCI state is applied for another DCI associated with different QCL assumption. Here, the common beam (e.g., DCI and PDSCH use the same beam) operation for this Option 2 can be assumed.

Option 3: The QCL assumption can be based on the second CORESET following its own activated TCI state, not inheriting a TCI state from the first scheduling DCI. By applying the TCI state of the second CORESET also to one or more PDSCH(s), e.g., in the same slot as the CORESET or also PDSCHs following the slot of the second CORESET.

Option 4: The scheduled PDSCH due to the QCL collision between PDSCH and PDCCH can be cancelled, and the gap symbol(s) can be reserved for allowing UE 102 to perform TCI state switching for DCI in the second CORESET.

### TDRA bit field for single DCI schedules multiple PDSCH/PUSCHs

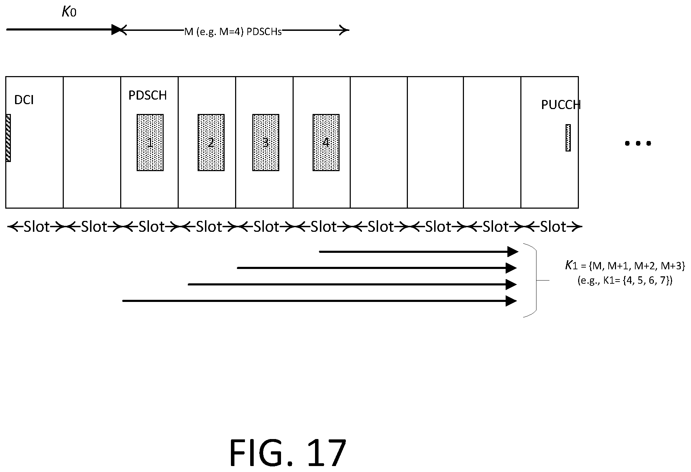

Disclosed below is further clarification of the previous disclosed subject matter for TDRA bit field for single DCI schedules multiple PDSCH/PUSCHs. TDRA bit field in single DCI scheduling multi-PDSCH or multi-PUSCH can be used for the indication of the number of scheduled PDSCH(s)/PUSCH(s). In addition, each PDSCH/PUSCH has a separate (valid) SLIV and mapping type (e.g., for DL, PDSCH mapping type A, B, or new type). Since each scheduled PDSCH/PUSCH has its own SLIV (i.e., the starting symbol in a slot and the length of scheduled symbols), so continuous or non-contiguous (time-domain) transmission of PDSCH/PUSCH can be supported. In Rel-15/16, the candidate slot for PDSCH reception is determined by UL slot N (where HARQ-ACK codebook is transmitted) and *K₁* set. If Rel-15/16 rule is applied for single DCI scheduling multi-PDSCH, then *K₁* is required expansion for handling the multi-PDSCH HARQ-ACK timing. As shown in FIG. 17, a single DCI schedule M (e.g., M=4) PDSCHs and the scheduled PDSCH reception occasion can be determined by the HARQ-ACK window and number of scheduled PDSCH (i.e., M). To unify the framework between Rel-16 and Rel-17, *K₁* can be extended to a set, and *K₁* set can be used for type-1 HARQ codebook generation. *K₁* set can be derived as follows: 1): based on the number of scheduled PDSCH(s) (i.e., the valid number of SLIV indicated by TDRA). 2): the value of PDSCH-to-HARQ-timing-indicator (a shared field) in single DCI scheduling multi-PDSCH format (e.g., DCI format 1_1), note the value of PDSCH-to-HARQ-timing-indicator is indicated as the last valid SLIV for the scheduled PDSCH in a row of TRDA table. For example, as shown in FIG. 17, a single DCI schedules M (e.g., 4) PDSCH, and PDSCH-to-HARQ-timing-indicator can be set to 4 for the last scheduled PDSCH. First, the size (i.e., number of elements) of K₁ set can be determined based on the number scheduled PDSCH, i.e., four for K₁ set for this example. Second, the element in K₁ set can be determined by increment one by one from the K₁ value indicated by PDSCH-to-HARQ-timing-indicator. As shown in FIG. 17, K₁ set can be equal to {Q, Q+1, ..., Q+M-1}, where Q denotes the PDSCH-to-HARQ-timing-indicator.

When UE 102 monitor PDCCH in a monitoring span (X, Y) (e.g., X=8 slots, Y=4 slots), UE only monitor PDCCH within Y slots. The starting slot can be signalled by higher layer (e.g., *PDCCH config* in RRC). For example, PDCCH configuration can signal the (starting) slot number *n* in a SFN and the span length Y (e.g., Y ≤ X/2). Note, if the PDCCH span length X is preconfigured based on the subcarrier spacing (e.g., X=8 for SCS = 960 KHz) then the PDCCH monitoring span X does not need to be signalled by the higher layer, otherwise, X can be signalled by the higher layer. However, since common CORESET configuration and search space are shared by multiple UEs in a serving cell, so accordingly, network need to take care alignment with UEs for this configuration like PDCCH control region for RAR/paging/system information. There are two possible solutions for the starting slot for X between multiple UEs to handle the common PDCCH alignment. First option is that the network (or gNB) can align multiple (or a group of) UEs to have the same starting slot for X and the starting of Y can be configured from the range of 0 to X-1. The second option is that network/gNB 114 can schedule different starting slot for X for multiple UEs, and the starting slot Y always start. For option 1, the starting (slot) offset of Y can be configured within the length of X (e.g., X = 8) for UE 102A. For option 2, the starting slot (or symbol for Y) in a PDCCH monitoring X is always align with the starting slot/symbol of X. One extreme configuration case is that both starting slot of X in a SFN and the starting slot of Y in X are not configured by higher layer. For this case, the starting slot of X in a SFN and starting slot of Y in X are pre-configured.

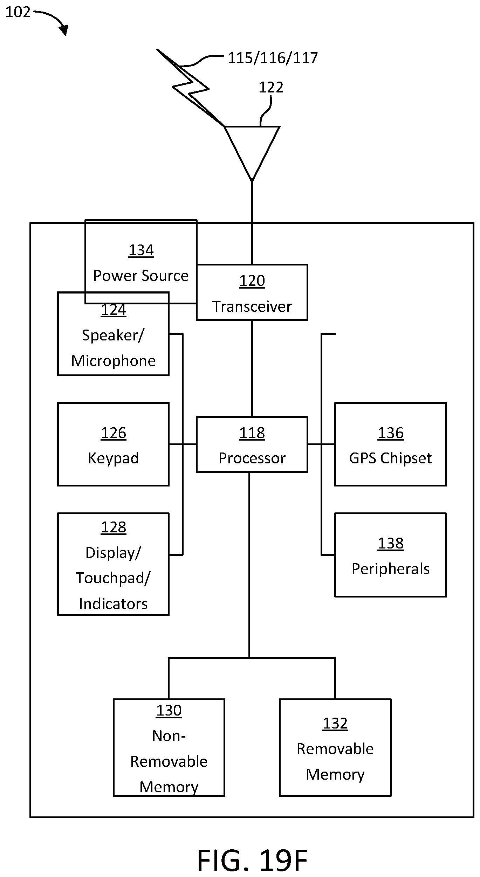

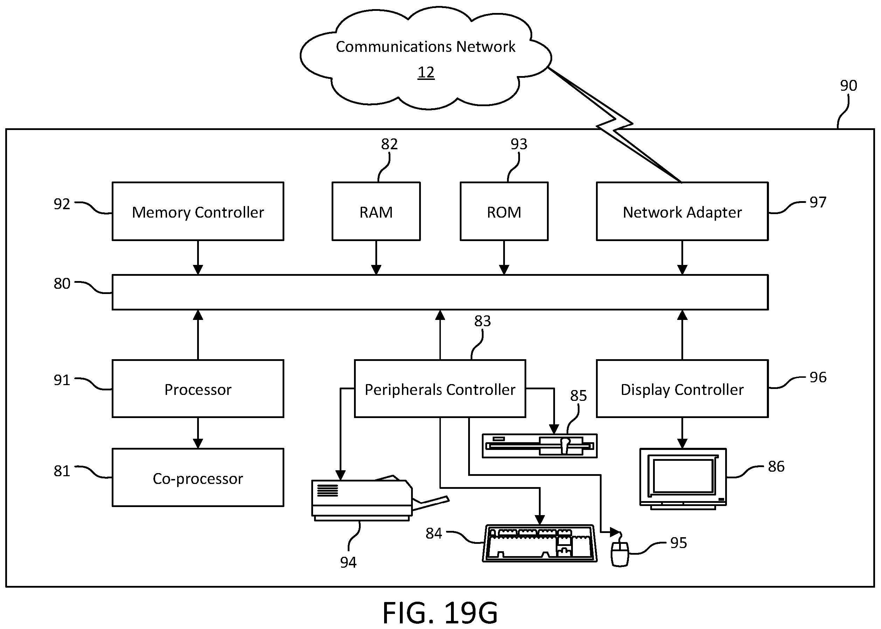

It is understood that the entities performing the steps illustrated herein may be logical entities. The steps may be stored in a memory of, and executing on a processor of, a device, server, or computer system such as those illustrated in FIG. 19F or FIG. 19G. Skipping steps, combining steps, or adding steps between exemplary methods disclosed herein is contemplated.

Table 8 are exemplary abbreviations and definitions.

**Table 8 - Abbreviations and Definitions**

| Abbreviations | Definitions |
|---|---|
| A/N | Ack/Nack |
| AL | Aggregation Level |
| API | Application Program Interface |
| AS | Access Stratum |
| BCCH | Broadcast Control Channel |
| BCH | Broadcast Channel |
| BD | Blind Decoding |
| BL | Bandwidth reduced Low complexity |
| BRS | Beam Reference Signal |
| CC | Component Carrier |
| CE | Control Element |
| CN | Core Network |
| CB | Code Block |
| CBG | Code Block Group |
| CCE | Control Channel Elements |
| CORESET | Control Resource Set |
| CP | Cyclic Prefix |
| CRI | CSI-RS Resource Indicator |
| CRC | Cyclic Redundancy Check |
| C-RNTI | Cell Radio-Network Temporary Identifier |
| DCI | Downlink Control Information |
| DL | Downlink |
| DL-SCH | Downlink Shared Channel |
| DRX | Discontinuous Reception |
| DTX | Discontinuous Transmission |
| EMBB | Enhanced Mobile Broadband |
| FDRA | Frequency Domain Resource Assignment |
| FFS | For Further Study |
| FR1 | Frequency Range 1 |
| FR2 | Frequency Range 2 |
| GP | Guard Period |
| HARQ | Hybrid Automatic Repeat Request |
| HD | High Definition |
| IE | Information element |
| LBT | Listen Before Talk |
| LoS | Line of Sight |
| LTE | Long term Evolution |
| MAC | Medium Access Control |
| MCL | Maximum Coupling Loss |
| MPL | Maximum Path Loss |
| NAS | Non-access Stratum |
| NACK | Non-ACKnowledgement |
| NR | New Radio |
| NR-DRS | NR Reference signal in Downlink (typically used for channel estimation) |
| RS | Reference signal |
| OFDM | Orthogonal frequency division multiplexing |
| PDCCH | Physical Downlink Control Channel |
| PDSCH | Physical Downlink Shared Data Channel |
| PDU | Protocol Data Unit |
| PUSCH | Physical Uplink Shared Channel |
| PRACH | Physical Random Access Channel |
| PRB | Physical Resource Block |
| QCL | Quasi-CoLocation |
| RAN | Radio Access Network |
| RAT | Radio Access Technology |
| RB | Resource block |
| RE | Resource Element |
| RI | Rank Indicator |
| RIV | Resource Indication Value |
| RNTI | Radio Network Temporary Identifier |
| RRC | Radio Resource Control |
| RV | Redundancy Version |
| SFN | System Frame Number |
| SI | System Information |
| SIB | System Information Block |
| SI-RNTI | System Information RNTI |
| SLIV | Start and Length Indicator Value |
| SPS-RNTI | Semi persistent scheduling RNTI |
| SR | Scheduling Request |
| SRI | SRS Resource Indicator |
| SRS | Sounding Reference Signal |
| SS | Search Space |
| TBS | Transport Block Size |
| TB | Transport Block |
| TCI | Transmission configuration indication |
| TDD | Time Division Duplex |
| TDRA | Time Domain Resource Assignment |
| TRP | Transmission and Reception Point |
| TTI | Transmission Time Interval |
| UE | User Equipment |
| UCI | Uplink Control Information |
| UL | Uplink |
| UR/LL | Ultra Reliable - Low Latency |
| URLLC | Ultra-Reliable and Low Latency Communications |
| WLAN | Wireless Local Area Network |

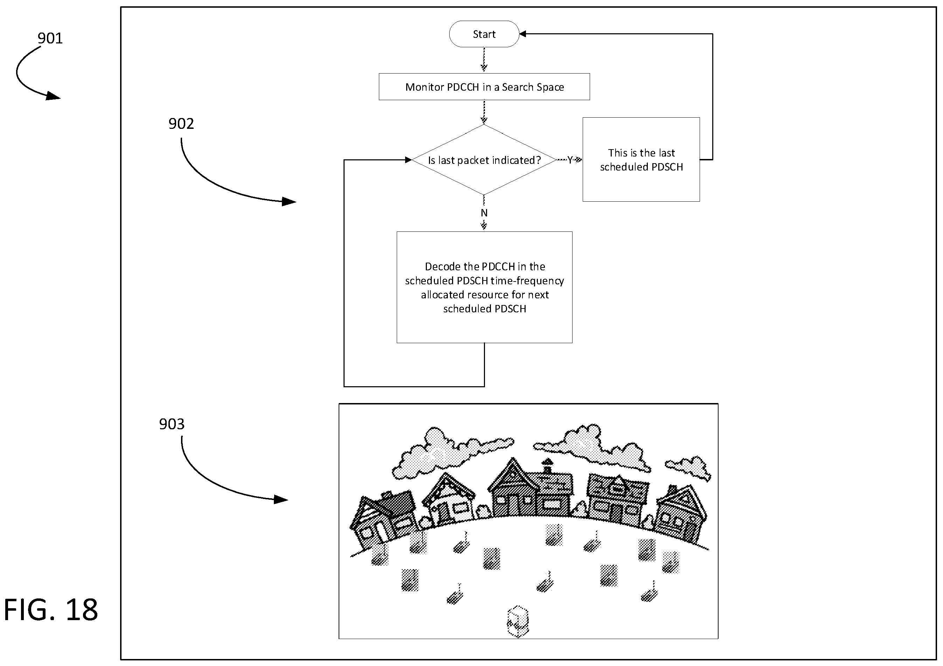

FIG. 18 illustrates an exemplary display (e.g., graphical user interface) that may be generated based on the methods, systems, and devices of downlink control channel for NR from 52.6 GHz and above, as discussed herein. Display interface 901 (e.g., touch screen display) may provide text in block 902 associated with downlink control channel for NR from 52.6 GHz and above. Progress of any of the steps (e.g., sent messages or success of steps) discussed herein may be displayed in block 902. In addition, graphical output 902 may be displayed on display interface 901. Graphical output 903 may be the topology of the devices implementing the methods, systems, and devices of downlink control channel for NR from 52.6 GHz and above, a graphical output of the progress of any method or systems discussed herein, or the like.

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), LTE-Advanced standards, and New Radio (NR), which is also referred to as "5G". 3GPP NR standards development is expected to continue and include the definition of next generation radio access technology (new RAT), which is expected to include the provision of new flexible radio access below 7 GHz, and the provision of new ultra-mobile broadband radio access above 7 GHz. The flexible radio access is expected to consist of a new, non-backwards compatible radio access in new spectrum below 6 GHz, and it is expected to include different operating modes that may be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 7 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (eMBB) ultra-reliable low-latency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V2I), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

FIG. 19A illustrates an example communications system 100 in which the methods and apparatuses of downlink control channel for NR from 52.6 GHz and above, such as the systems and methods illustrated in FIG.'s described and claimed herein may be used. The communications system 100 may include wireless transmit/receive units (WTRUs) 102a, 102b, 102c, 102d, 102e, 102f, or 102g (which generally or collectively may be referred to as WTRU 102 or WTRUs 102). The communications system 100 may include, a radio access network (RAN) 103/104/105/103b/104b/105b, a core network 106/107/109, a public switched telephone network (PSTN) 108, the Internet 110, other networks 112, and Network Services 113. Network Services 113 may include, for example, a V2X server, V2X functions, a ProSe server, ProSe functions, IoT services, video streaming, or edge computing, etc.

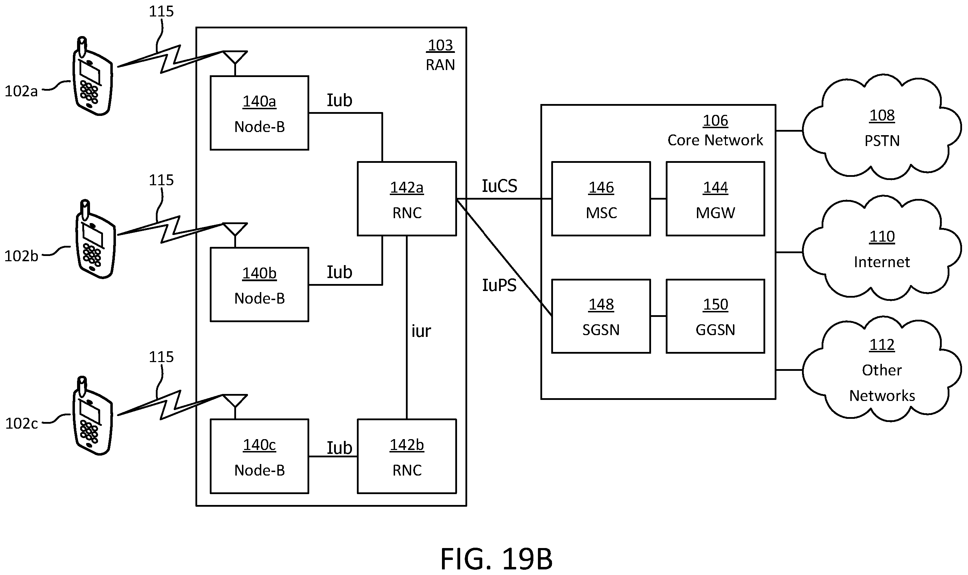

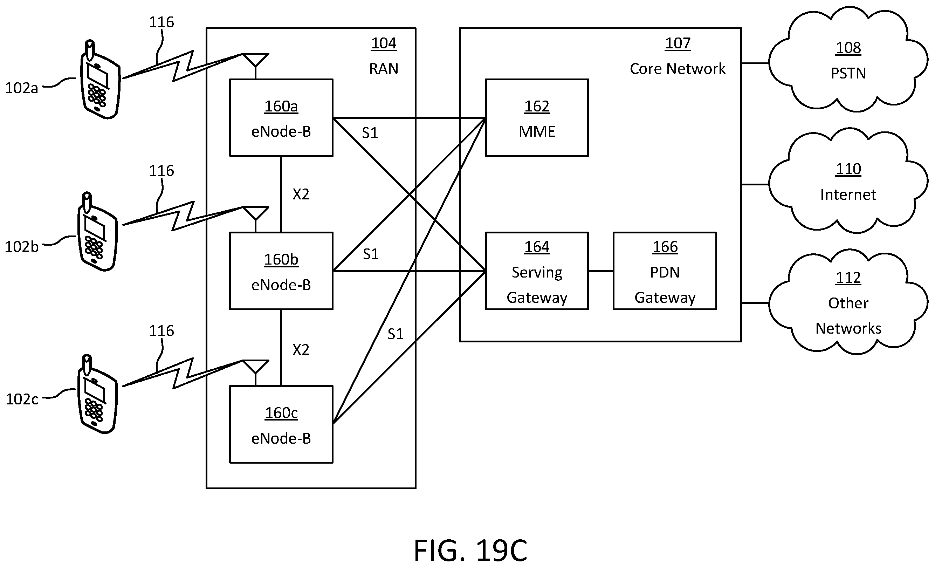

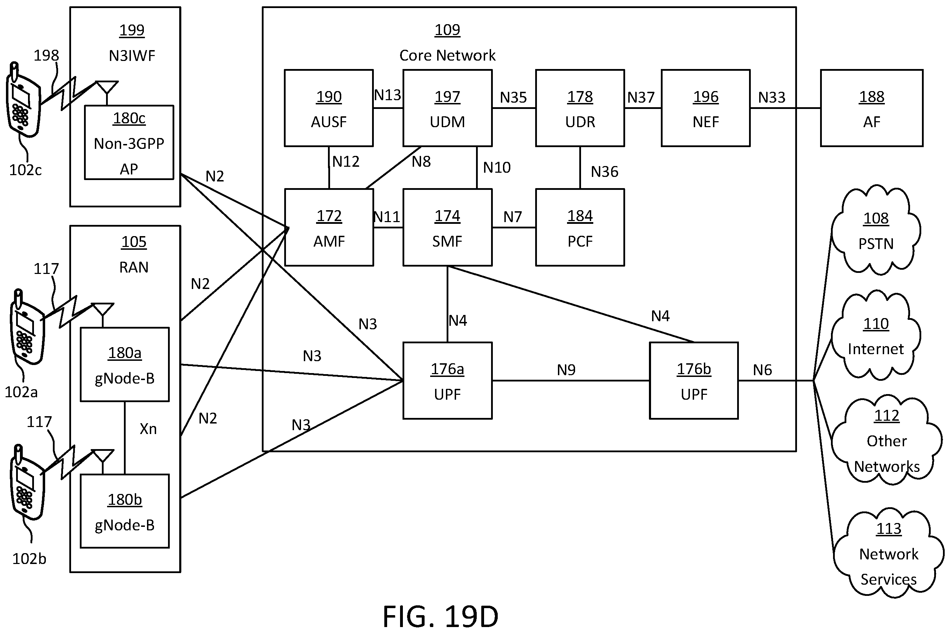

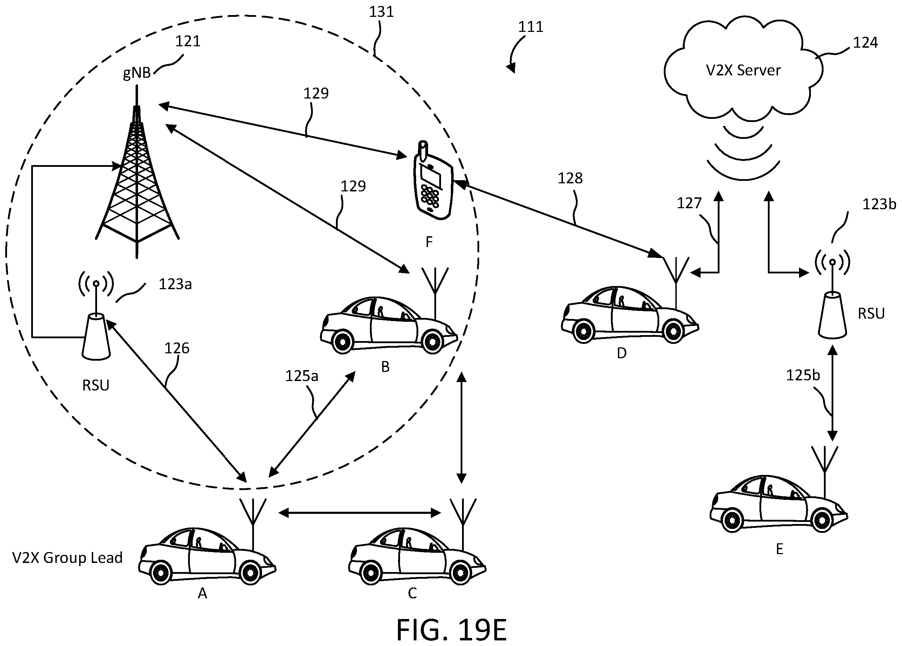

It will be appreciated that the concepts disclosed herein may be used with any number of WTRUs, base stations, networks, or network elements. Each of the WTRUs 102a, 102b, 102c, 102d, 102e, 102f, or102g may be any type of apparatus or device configured to operate or communicate in a wireless environment. Although each WTRU 102a, 102b, 102c, 102d, 102e, 102f, or 102g may be depicted in FIG. 19A, FIG. 19B, FIG. 19C, FIG. 19D, FIG. 19E, or FIG. 19F as a hand-held wireless communications apparatus, it is understood that with the wide variety of use cases contemplated for 5G wireless communications, each WTRU may comprise or be embodied in any type of apparatus or device configured to transmit or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, bus, truck, train, or airplane, and the like.

The communications system 100 may also include a base station 114a and a base station 114b. In the example of FIG. 19A, each base stations 114a and 114b is depicted as a single element. In practice, the base stations 114a and 114b may include any number of interconnected base stations or network elements. Base stations 114a may be any type of device configured to wirelessly interface with at least one of the WTRUs 102a, 102b, and 102c to facilitate access to one or more communication networks, such as the core network 106/107/109, the Internet 110, Network Services 113, or the other networks 112. Similarly, base station 114b may be any type of device configured to wiredly or wirelessly interface with at least one of the Remote Radio Heads (RRHs) 118a, 118b, Transmission and Reception Points (TRPs) 119a, 119b, or Roadside Units (RSUs) 120a and 120b to facilitate access to one or more communication networks, such as the core network 106/107/109, the Internet 110, other networks 112, or Network Services 113. RRHs 118a, 118b may be any type of device configured to wirelessly interface with at least one of the WTRUs 102, e.g., WTRU 102c, to facilitate access to one or more communication networks, such as the core network 106/107/109, the Internet 110, Network Services 113, or other networks 112.

TRPs 119a, 119b may be any type of device configured to wirelessly interface with at least one of the WTRU 102d, to facilitate access to one or more communication networks, such as the core network 106/107/109, the Internet 110, Network Services 113, or other networks 112. RSUs 120a and 120b may be any type of device configured to wirelessly interface with at least one of the WTRU 102e or 102f, to facilitate access to one or more communication networks, such as the core network 106/107/109, the Internet 110, other networks 112, or Network Services 113. By way of example, the base stations 114a, 114b may be a Base Transceiver Station (BTS), a Node-B, an eNode B, a Home Node B, a Home eNode B, a Next Generation Node-B (gNode B), a satellite, a site controller, an access point (AP), a wireless router, and the like.

The base station 114a may be part of the RAN 103/104/105, which may also include other base stations or network elements (not shown), such as a Base Station Controller (BSC), a Radio Network Controller (RNC), relay nodes, etc. Similarly, the base station 114b may be part of the RAN 103b/104b/105b, which may also include other base stations or network elements (not shown), such as a BSC, a RNC, relay nodes, etc. The base station 114a may be configured to transmit or receive wireless signals within a particular geographic region, which may be referred to as a cell (not shown). Similarly, the base station 114b may be configured to transmit or receive wired or wireless signals within a particular geographic region, which may be referred to as a cell (not shown) for methods, systems, and devices of downlink control channel for NR from 52.6 GHz and above, as disclosed herein. Similarly, the base station 114b may be configured to transmit or receive wired or wireless signals within a particular geographic region, which may be referred to as a cell (not shown). The cell may further be divided into cell sectors. For example, the cell associated with the base station 114a may be divided into three sectors. Thus, in an example, the base station 114a may include three transceivers, e.g., one for each sector of the cell. In an example, the base station 114a may employ multiple-input multiple output (MIMO) technology and, therefore, may utilize multiple transceivers for each sector of the cell.

The base stations 114a may communicate with one or more of the WTRUs 102a, 102b, 102c, or 102g over an air interface 115/116/117, which may be any suitable wireless communication link (e.g., radio frequency (RF), microwave, infrared (IR), ultraviolet (UV), visible light, cmWave, mmWave, etc.). The air interface 115/116/117 may be established using any suitable radio access technology (RAT).

The base stations 114b may communicate with one or more of the RRHs 118a, 118b, TRPs 119a, 119b, or RSUs 120a, 120b, over a wired or air interface 115b/116b/117b, which may be any suitable wired (e.g., cable, optical fiber, etc.) or wireless communication link (e.g., radio frequency (RF), microwave, infrared (IR), ultraviolet (UV), visible light, cmWave, mmWave, etc.). The air interface 115b/116b/117b may be established using any suitable radio access technology (RAT).

The RRHs 118a, 118b, TRPs 119a, 119b or RSUs 120a, 120b, may communicate with one or more of the WTRUs 102c, 102d, 102e, 102f over an air interface 115c/116c/117c, which may be any suitable wireless communication link (e.g., radio frequency (RF), microwave, infrared (IR), ultraviolet (UV), visible light, cmWave, mmWave, etc.). The air interface 115c/116c/117c may be established using any suitable radio access technology (RAT).

The WTRUs 102a, 102b, 102c,102d, 102e, or 102f may communicate with one another over an air interface 115d/116d/117d, such as Sidelink communication, which may be any suitable wireless communication link (e.g., radio frequency (RF), microwave, infrared (IR), ultraviolet (UV), visible light, cmWave, mmWave, etc.). The air interface 115d/116d/117d may be established using any suitable radio access technology (RAT).

The communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b,TRPs 119a, 119b and RSUs 120a, 120b, in the RAN 103b/104b/105b and the WTRUs 102c, 102d, 102e, 102f, may implement a radio technology such as Universal Mobile Telecommunications System (UMTS) Terrestrial Radio Access (UTRA), which may establish the air interface 115/116/117 or 115c/116c/117c respectively using wideband CDMA (WCDMA). WCDMA may include communication protocols such as High-Speed Packet Access (HSPA) or Evolved HSPA (HSPA+). HSPA may include High-Speed Downlink Packet Access (HSDPA) or High-Speed Uplink Packet Access (HSUPA).

In an example, the base station 114a and the WTRUs 102a, 102b, 102c, or RRHs 118a, 118b, TRPs 119a, 119b, or RSUs 120a, 120b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) or LTE-Advanced (LTE-A). In the future, the air interface 115/116/117 or 115c/116c/117c may implement 3GPP NR technology. The LTE and LTE-A technology may include LTE D2D and V2X technologies and interfaces (such as Sidelink communications, etc.). Similarly, the 3GPP NR technology includes NR V2X technologies and interface (such as Sidelink communications, etc.).

The base station 114a in the RAN 103/104/105 and the WTRUs 102a, 102b, 102c, and 102g or RRHs 118a, 118b, TRPs 119a, 119b or RSUs 120a, 120b in the RAN 103b/104b/105b and the WTRUs 102c, 102d, 102e, 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in FIG. 19A may be a wireless router, Home Node B, Home eNode B, or access point, for example, and may utilize any suitable RAT for facilitating wireless connectivity in a localized area, such as a place of business, a home, a vehicle, a train, an aerial, a satellite, a manufactory, a campus, and the like, for implementing the methods, systems, and devices of downlink control channel for NR from 52.6 GHz and above, as disclosed herein. In an example, the base station 114c and the WTRUs 102, e.g., WTRU 102e, may implement a radio technology such as IEEE 802.11 to establish a wireless local area network (WLAN). similarly, the base station 114c and the WTRUs 102d, may implement a radio technology such as IEEE 802.15 to establish a wireless personal area network (WPAN). In yet another example, the base station 114c and the WTRUs 102, e.g., WTRU 102e, may utilize a cellular-based RAT (e.g., WCDMA, CDMA2000, GSM, LTE, LTE-A, NR, etc.) to establish a picocell or femtocell. As shown in FIG. 19A, the base station 114cmay have a direct connection to the Internet 110. Thus, the base station 114c may not be required to access the Internet 110 via the core network 106/107/109.

The RAN 103/104/105 or RAN 103b/104b/105b may be in communication with the core network 106/107/109, which may be any type of network configured to provide voice, data, messaging, authorization and authentication, applications, or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, packet data network connectivity, Ethernet connectivity, video distribution, etc., or perform high-level security functions, such as user authentication.

Although not shown in FIG. 19A, it will be appreciated that the RAN 103/104/105 or RAN 103b/104b/105b or the core network 106/107/109 may be in direct or indirect communication with other RANs that employ the same RAT as the RAN 103/104/105 or RAN 103b/104b/105b or a different RAT. For example, in addition to being connected to the RAN 103/104/105 or RAN 103b/104b/105b, which may be utilizing an E-UTRA radio technology, the core network 106/107/109 may also be in communication with another RAN (not shown) employing a GSM or NR radio technology.

The core network 106/107/109 may also serve as a gateway for the WTRUs 102a, 102b, 102c, 102d, 102e to access the PSTN 108, the Internet 110, or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned or operated by other service providers. For example, the networks 112 may include any type of packet data network (e.g., an IEEE 802.3 Ethernet network) or another core network connected to one or more RANs, which may employ the same RAT as the RAN 103/104/105 or RAN 103b/104b/105b or a different RAT.

Some or all of the WTRUs 102a, 102b, 102c, 102d, 102e, and 102f in the communications system 100 may include multi-mode capabilities, e.g., the WTRUs 102a, 102b, 102c, 102d, 102e, and 102f may include multiple transceivers for communicating with different wireless networks over different wireless links for implementing methods, systems, and devices of downlink control channel for NR from 52.6 GHz and above, as disclosed herein. For example, the WTRU 102g shown in FIG. 19A may be configured to communicate with the base station 114a, which may employ a cellular-based radio technology, and with the base station 114c, which may employ an IEEE 802 radio technology.

Although not shown in FIG. 19A, it will be appreciated that a User Equipment may make a wired connection to a gateway. The gateway maybe a Residential Gateway (RG). The RG may provide connectivity to a Core Network 106/107/109. It will be appreciated that much of the subject matter included herein may equally apply to UEs that are WTRUs and UEs that use a wired connection to connect with a network. For example, the subject matter that applies to the wireless interfaces 115, 116, 117 and 115c/116c/117c may equally apply to a wired connection.

FIG. 19B is a system diagram of an example RAN 103 and core network 106 that may implement methods, systems, and devices of downlink control channel for NR from 52.6 GHz and above, as disclosed herein. As noted above, the RAN 103 may employ a UTRA radio technology to communicate with the WTRUs 102a, 102b, and 102c over the air interface 115. The RAN 103 may also be in communication with the core network 106. As shown in FIG. 19B, the RAN 103 may include Node-Bs 140a, 140b, and 140c, which may each include one or more transceivers for communicating with the WTRUs 102a, 102b, and 102c over the air interface 115. The Node-Bs 140a, 140b, and 140c may each be associated with a particular cell (not shown) within the RAN 103. The RAN 103 may also include RNCs 142a, 142b. It will be appreciated that the RAN 103 may include any number of Node-Bs and Radio Network Controllers (RNCs.)

As shown in FIG. 19B, the Node-Bs 140a, 140b may be in communication with the RNC 142a. Additionally, the Node-B 140c may be in communication with the RNC 142b. The Node-Bs 140a, 140b, and 140c may communicate with the respective RNCs 142a and 142b via an Iub interface. The RNCs 142a and 142b may be in communication with one another via an Iur interface. Each of the RNCs 142aand 142b may be configured to control the respective Node-Bs 140a, 140b, and 140c to which it is connected. In addition, each of the RNCs 142aand 142b may be configured to carry out or support other functionality, such as outer loop power control, load control, admission control, packet scheduling, handover control, macrodiversity, security functions, data encryption, and the like.

The core network 106 shown in FIG. 19B may include a media gateway (MGW) 144, a Mobile Switching Center (MSC) 146, a Serving GPRS Support Node (SGSN) 148, or a Gateway GPRS Support Node (GGSN) 150. While each of the foregoing elements are depicted as part of the core network 106, it will be appreciated that any one of these elements may be owned or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and 102c with access to circuit-switched networks, such as the PSTN 108, to facilitate communications between the WTRUs 102a, 102b, and 102c, and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and 102c with access to packet-switched networks, such as the Internet 110, to facilitate communications between and the WTRUs 102a, 102b, and 102c, and IP-enabled devices.

The core network 106 may also be connected to the other networks 112, which may include other wired or wireless networks that are owned or operated by other service providers.

FIG. 19C is a system diagram of an example RAN 104 and core network 107 that may implement methods, systems, and devices of downlink control channel for NR from 52.6 GHz and above, as disclosed herein. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, and 160c, though it will be appreciated that the RAN 104 may include any number of eNode-Bs. The eNode-Bs 160a, 160b, and 160c may each include one or more transceivers for communicating with the WTRUs 102a, 102b, and 102c over the air interface 116. For example, the eNode-Bs 160a, 160b, and 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink or downlink, and the like. As shown in FIG. 19C, the eNode-Bs 160a, 160b, and 160c may communicate with one another over an X2 interface.

The core network 107 shown in FIG. 19C may include a Mobility Management Gateway (MME) 162, a serving gateway 164, and a Packet Data Network (PDN) gateway 166. While each of the foregoing elements are depicted as part of the core network 107, it will be appreciated that any one of these elements may be owned or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, and 102c, bearer activation/deactivation, selecting a particular serving gateway during an initial attach of the WTRUs 102a, 102b, and 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, and 102c. The serving gateway 164 may also perform other functions, such as anchoring user planes during inter-eNode B handovers, triggering paging when downlink data is available for the WTRUs 102a, 102b, and 102c, managing and storing contexts of the WTRUs 102a, 102b, and 102c, and the like.

The serving gateway 164 may also be connected to the PDN gateway 166, which may provide the WTRUs 102a, 102b, and 102c with access to packet-switched networks, such as the Internet 110, to facilitate communications between the WTRUs 102a, 102b, 102c, and IP-enabled devices.

The core network 107 may facilitate communications with other networks. For example, the core network 107 may provide the WTRUs 102a, 102b, and 102c with access to circuit-switched networks, such as the PSTN 108, to facilitate communications between the WTRUs 102a, 102b, and 102c and traditional land-line communications devices. For example, the core network 107 may include, or may communicate with, an IP gateway (e.g., an IP Multimedia Subsystem (IMS) server) that serves as an interface between the core network 107 and the PSTN 108. In addition, the core network 107 may provide the WTRUs 102a, 102b, and 102c with access to the networks 112, which may include other wired or wireless networks that are owned or operated by other service providers.

FIG. 19D is a system diagram of an example RAN 105 and core network 109 that may implement methods, systems, and devices of downlink control channel for NR from 52.6 GHz and above, as disclosed herein. The RAN 105 may employ an NR radio technology to communicate with the WTRUs 102a and 102b over the air interface 117. The RAN 105 may also be in communication with the core network 109. A Non-3GPP Interworking Function (N3IWF) 199 may employ a non-3GPP radio technology to communicate with the WTRU 102c over the air interface 198. The N3IWF 199 may also be in communication with the core network 109.

The RAN 105 may include gNode-Bs 180a and 180b. It will be appreciated that the RAN 105 may include any number of gNode-Bs. The gNode-Bs 180a and 180b may each include one or more transceivers for communicating with the WTRUs 102a and 102b over the air interface 117. When integrated access and backhaul connection are used, the same air interface may be used between the WTRUs and gNode-Bs, which may be the core network 109 via one or multiple gNBs. The gNode-Bs 180a and 180b may implement MIMO, MU-MIMO, or digital beamforming technology. Thus, the gNode-B 180a, for example, may use multiple antennas to transmit wireless signals to, and receive wireless signals from, the WTRU 102a. It should be appreciated that the RAN 105 may employ of other types of base stations such as an eNode-B. It will also be appreciated the RAN 105 may employ more than one type of base station. For example, the RAN may employ eNode-Bs and gNode-Bs.

The N3IWF 199 may include a non-3GPP Access Point 180c. It will be appreciated that the N3IWF 199 may include any number of non-3GPP Access Points. The non-3GPP Access Point 180c may include one or more transceivers for communicating with the WTRUs 102c over the air interface 198. The non-3GPP Access Point 180c may use the 802.11 protocol to communicate with the WTRU 102c over the air interface 198.

Each of the gNode-Bs 180a and 180b may be associated with a particular cell (not shown) and may be configured to handle radio resource management decisions, handover decisions, scheduling of users in the uplink or downlink, and the like. As shown in FIG. 19D, the gNode-Bs 180a and 180b may communicate with one another over an Xn interface, for example.

The core network 109 shown in FIG. 19D may be a 5G core network (5GC). The core network 109 may offer numerous communication services to customers who are interconnected by the radio access network. The core network 109 comprises a number of entities that perform the functionality of the core network. As used herein, the term "core network entity" or "network function" refers to any entity that performs one or more functionalities of a core network. It is understood that such core network entities may be logical entities that are implemented in the form of computer-executable instructions (software) stored in a memory of, and executing on a processor of, an apparatus configured for wireless or network communications or a computer system, such as system 90 illustrated in FIG. 19G.

In the example of FIG. 19D, the 5G Core Network 109 may include an access and mobility management function (AMF) 172, a Session Management Function (SMF) 174, User Plane Functions (UPFs) 176a and 176b, a User Data Management Function (UDM) 197, an Authentication Server Function (AUSF) 190, a Network Exposure Function (NEF) 196, a Policy Control Function (PCF) 184, a Non-3GPP Interworking Function (N3IWF) 199, a User Data Repository (UDR) 178. While each of the foregoing elements are depicted as part of the 5G core network 109, it will be appreciated that any one of these elements may be owned or operated by an entity other than the core network operator. It will also be appreciated that a 5G core network may not consist of all of these elements, may consist of additional elements, and may consist of multiple instances of each of these elements. FIG. 19D shows that network functions directly connect with one another, however, it should be appreciated that they may communicate via routing agents such as a diameter routing agent or message buses.

In the example of FIG. 19D, connectivity between network functions is achieved via a set of interfaces, or reference points. It will be appreciated that network functions could be modeled, described, or implemented as a set of services that are invoked, or called, by other network functions or services. Invocation of a Network Function service may be achieved via a direct connection between network functions, an exchange of messaging on a message bus, calling a software function, etc.

The AMF 172 may be connected to the RAN 105 via an N2 interface and may serve as a control node. For example, the AMF 172 may be responsible for registration management, connection management, reachability management, access authentication, access authorization. The AMF may be responsible forwarding user plane tunnel configuration information to the RAN 105 via the N2 interface. The AMF 172 may receive the user plane tunnel configuration information from the SMF via an N11 interface. The AMF 172 may generally route and forward NAS packets to/from the WTRUs 102a, 102b, and 102c via an N1 interface. The N1 interface is not shown in FIG. 19D.

The SMF 174 may be connected to the AMF 172 via an N11 interface. Similarly the SMF may be connected to the PCF 184 via an N7 interface, and to the UPFs 176a and 176b via an N4 interface. The SMF 174 may serve as a control node. For example, the SMF 174 may be responsible for Session Management, IP address allocation for the WTRUs 102a, 102b, and 102c, management and configuration of traffic steering rules in the UPF 176a and UPF 176b, and generation of downlink data notifications to the AMF 172.

The UPF 176a and UPF176b may provide the WTRUs 102a, 102b, and 102c with access to a Packet Data Network (PDN), such as the Internet 110, to facilitate communications between the WTRUs 102a, 102b, and 102c and other devices. The UPF 176a and UPF 176b may also provide the WTRUs 102a, 102b, and 102c with access to other types of packet data networks. For example, Other Networks 112 may be Ethernet Networks or any type of network that exchanges packets of data. The UPF 176a and UPF 176b may receive traffic steering rules from the SMF 174 via the N4 interface. The UPF 176a and UPF 176b may provide access to a packet data network by connecting a packet data network with an N6 interface or by connecting to each other and to other UPFs via an N9 interface. In addition to providing access to packet data networks, the UPF 176 may be responsible packet routing and forwarding, policy rule enforcement, quality of service handling for user plane traffic, downlink packet buffering.

The AMF 172 may also be connected to the N3IWF 199, for example, via an N2 interface. The N3IWF facilitates a connection between the WTRU 102c and the 5G core network 170, for example, via radio interface technologies that are not defined by 3GPP. The AMF may interact with the N3IWF 199 in the same, or similar, manner that it interacts with the RAN 105.

The PCF 184 may be connected to the SMF 174 via an N7 interface, connected to the AMF 172 via an N15 interface, and to an Application Function (AF) 188 via an N5 interface. The N15 and N5 interfaces are not shown in FIG. 19D. The PCF 184 may provide policy rules to control plane nodes such as the AMF 172 and SMF 174, allowing the control plane nodes to enforce these rules. The PCF 184, may send policies to the AMF 172 for the WTRUs 102a, 102b, and 102c so that the AMF may deliver the policies to the WTRUs 102a, 102b, and 102c via an N1 interface. Policies may then be enforced, or applied, at the WTRUs 102a, 102b, and 102c.

The UDR 178 may act as a repository for authentication credentials and subscription information. The UDR may connect with network functions, so that network function can add to, read from, and modify the data that is in the repository. For example, the UDR 178 may connect with the PCF 184 via an N36 interface. Similarly, the UDR 178 may connect with the NEF 196 via an N37 interface, and the UDR 178 may connect with the UDM 197 via an N35 interface.

The UDM 197 may serve as an interface between the UDR 178 and other network functions. The UDM 197 may authorize network functions to access of the UDR 178. For example, the UDM 197 may connect with the AMF 172 via an N8 interface, the UDM 197 may connect with the SMF 174 via an N10 interface. Similarly, the UDM 197 may connect with the AUSF 190 via an N13 interface. The UDR 178 and UDM 197 may be tightly integrated.

The AUSF 190 performs authentication related operations and connect with the UDM 178 via an N13 interface and to the AMF 172 via an N12 interface.

The NEF 196 exposes capabilities and services in the 5G core network 109 to Application Functions (AF) 188. Exposure may occur on the N33 API interface. The NEF may connect with an AF 188 via an N33 interface and it may connect with other network functions in order to expose the capabilities and services of the 5G core network 109.

Application Functions 188 may interact with network functions in the 5G Core Network 109. Interaction between the Application Functions 188 and network functions may be via a direct interface or may occur via the NEF 196. The Application Functions 188 may be considered part of the 5G Core Network 109 or may be external to the 5G Core Network 109 and deployed by enterprises that have a business relationship with the mobile network operator.

Network Slicing is a mechanism that could be used by mobile network operators to support one or more 'virtual' core networks behind the operator's air interface. This involves 'slicing' the core network into one or more virtual networks to support different RANs or different service types running across a single RAN. Network slicing enables the operator to create networks customized to provide optimized solutions for different market scenarios which demands diverse requirements, e.g. in the areas of functionality, performance and isolation.

3GPP has designed the 5G core network to support Network Slicing. Network Slicing is a good tool that network operators can use to support the diverse set of 5G use cases (e.g., massive IoT, critical communications, V2X, and enhanced mobile broadband) which demand very diverse and sometimes extreme requirements. Without the use of network slicing techniques, it is likely that the network architecture would not be flexible and scalable enough to efficiently support a wider range of use cases need when each use case has its own specific set of performance, scalability, and availability requirements. Furthermore, introduction of new network services should be made more efficient.

Referring again to FIG. 19D, in a network slicing scenario, a WTRU 102a, 102b, or 102c may connect with an AMF 172, via an N1 interface. The AMF may be logically part of one or more slices. The AMF may coordinate the connection or communication of WTRU 102a, 102b, or 102c with one or more UPF 176a and 176b, SMF 174, and other network functions. Each of the UPFs 176a and 176b, SMF 174, and other network functions may be part of the same slice or different slices. When they are part of different slices, they may be isolated from each other in the sense that they may utilize different computing resources, security credentials, etc.

The core network 109 may facilitate communications with other networks. For example, the core network 109 may include, or may communicate with, an IP gateway, such as an IP Multimedia Subsystem (IMS) server, that serves as an interface between the 5G core network 109 and a PSTN 108. For example, the core network 109 may include, or communicate with a short message service (SMS) service center that facilities communication via the short message service. For example, the 5G core network 109 may facilitate the exchange of non-IP data packets between the WTRUs 102a, 102b, and 102c and servers or applications functions 188. In addition, the core network 170 may provide the WTRUs 102a, 102b, and 102c with access to the networks 112, which may include other wired or wireless networks that are owned or operated by other service providers.

The core network entities described herein and illustrated in FIG. 19A, FIG. 19C, FIG. 19D, or FIG. 19E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in FIG. 19A, FIG. 19B, FIG. 19C, FIG. 19D, or FIG. 19E are provided by way of example only, and it is understood that the subject matter disclosed and claimed herein may be embodied or implemented in any similar communication system, whether presently defined or defined in the future.

FIG. 19E illustrates an example communications system 111 in which the systems, methods, apparatuses that implement downlink control channel for NR from 52.6 GHz and above, described herein, may be used. Communications system 111 may include Wireless Transmit/Receive Units (WTRUs) A, B, C, D, E, F, a base station gNB 121, a V2X server 124, and Road Side Units (RSUs) 123a and 123b. In practice, the concepts presented herein may be applied to any number of WTRUs, base station gNBs, V2X networks, or other network elements. One or several or all WTRUs A, B, C, D, E, and F may be out of range of the access network coverage 131. WTRUs A, B, and C form a V2X group, among which WTRU A is the group lead and WTRUs B and C are group members.

WTRUs A, B, C, D, E, and F may communicate with each other over a Uu interface 129 via the gNB 121 if they are within the access network coverage 131. In the example of FIG. 19E, WTRUs B and F are shown within access network coverage 131. WTRUs A, B, C, D, E, and F may communicate with each other directly via a Sidelink interface (e.g., PC5 or NR PC5) such as interface 125a, 125b, or 128, whether they are under the access network coverage 131 or out of the access network coverage 131. For instance, in the example of FIG. 19E, WRTU D, which is outside of the access network coverage 131, communicates with WTRU F, which is inside the coverage 131.

WTRUs A, B, C, D, E, and F may communicate with RSU 123a or 123b via a Vehicle-to-Network (V2N) 133 or Sidelink interface 125b. WTRUs A, B, C, D, E, and F may communicate to a V2X Server 124 via a Vehicle-to-Infrastructure (V2I) interface 127. WTRUs A, B, C, D, E, and F may communicate to another UE via a Vehicle-to-Person (V2P) interface 128.

FIG. 19F is a block diagram of an example apparatus or device WTRU 102 that may be configured for wireless communications and operations in accordance with the systems, methods, and apparatuses that implement downlink control channel for NR from 52.6 GHz and above, described herein, such as a WTRU 102 of FIG. 19A, FIG. 19B, FIG. 19C, FIG. 19D, or FIG. 19E, or FIG. 10A. As shown in FIG. 19F, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements. Also, the base stations 114a and 114b, or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, a next generation node-B (gNode-B), and proxy nodes, among others, may include some or all of the elements depicted in FIG. 19F and may be an exemplary implementation that performs the disclosed systems and methods for downlink control channel for NR from 52.6 GHz and above described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, or any other functionality that enables the WTRU 102 to operate in a wireless environment. The processor 118 may be coupled to the transceiver 120, which may be coupled to the transmit/receive element 122. While FIG. 19F depicts the processor 118 and the transceiver 120 as separate components, it will be appreciated that the processor 118 and the transceiver 120 may be integrated together in an electronic package or chip.

The transmit/receive element 122 of a UE may be configured to transmit signals to, or receive signals from, a base station (e.g., the base station 114a of FIG. 19A) over the air interface 115/116/117 or another UE over the air interface 115d/116d/117d. For example, the transmit/receive element 122 may be an antenna configured to transmit or receive RF signals. The transmit/receive element 122 may be an emitter/detector configured to transmit or receive IR, UV, or visible light signals, for example. The transmit/receive element 122 may be configured to transmit and receive both RF and light signals. It will be appreciated that the transmit/receive element 122 may be configured to transmit or receive any combination of wireless or wired signals.

In addition, although the transmit/receive element 122 is depicted in FIG. 19F as a single element, the WTRU 102 may include any number of transmit/receive elements 122. More specifically, the WTRU 102 may employ MIMO technology. Thus, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, for example NR and IEEE 802.11 or NR and E-UTRA, or to communicate with the same RAT via multiple beams to different RRHs, TRPs, RSUs, or nodes.

The processor 118 of the WTRU 102 may be coupled to, and may receive user input data from, the speaker/microphone 124, the keypad 126, or the display/touchpad/indicators 128 (e.g., a liquid crystal display (LCD) display unit or organic light-emitting diode (OLED) display unit. The processor 118 may also output user data to the speaker/microphone 124, the keypad 126, or the display/touchpad/indicators 128. In addition, the processor 118 may access information from, and store data in, any type of suitable memory, such as the non-removable memory 130 or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server that is hosted in the cloud or in an edge computing platform or in a home computer (not shown). The processor 118 may be configured to control lighting patterns, images, or colors on the display or indicators 128 in response to whether the setup of the channels or other procedures in some of the examples described herein are successful or unsuccessful, or otherwise indicate a status of downlink control channel and associated components. The control lighting patterns, images, or colors on the display or indicators 128 may be reflective of the status of any of the method flows or components in the FIG.'s illustrated or discussed herein. Disclosed herein are messages and procedures of downlink control channel for NR from 52.6 GHz and above. The messages and procedures may be extended to provide interface/API for users to request resources via an input source (e.g., speaker/microphone 124, keypad 126, or display/touchpad/indicators 128) and request, configure, or query downlink control channel for NR from 52.6 GHz and above related information, among other things that may be displayed on display 128.

The processor 118 may receive power from the power source 134 and may be configured to distribute or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software or hardware modules that provide additional features, functionality, or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The WTRU 102 may be included in other apparatuses or devices, such as a sensor, consumer electronics, a wearable device such as a smart watch or smart clothing, a medical or eHealth device, a robot, industrial equipment, a drone, a vehicle such as a car, truck, train, or an airplane. The WTRU 102 may connect with other components, modules, or systems of such apparatuses or devices via one or more interconnect interfaces, such as an interconnect interface that may comprise one of the peripherals 138.

FIG. 19G is a block diagram of an exemplary computing system 90 in which one or more apparatuses of the communications networks illustrated in FIG. 19A, FIG. 19C, FIG. 19D and FIG. 19E as well as downlink control channel for NR from 52.6 GHz and above, such as the systems and methods illustrated herein and claimed herein may be embodied, such as certain nodes or functional entities in the RAN 103/104/105, Core Network 106/107/109, PSTN 108, Internet 110, Other Networks 112, or Network Services 113. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, or any other functionality that enables the computing system 90 to operate in a communications network. Coprocessor 81 is an optional processor, distinct from main processor 91, that may perform additional functions or assist processor 91. Processor 91 or coprocessor 81 may receive, generate, and process data related to the methods and apparatuses disclosed herein for downlink control channel for NR from 52.6 GHz and above.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally include stored data that cannot easily be modified. Data stored in RAM 82 may be read or changed by processor 91 or other hardware devices. Access to RAM 82 or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may include peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may include communication circuitry, such as for example a wireless or wired network adapter 97, that may be used to connect computing system 90 to an external communications network or devices, such as the RAN 103/104/105, Core Network 106/107/109, PSTN 108, Internet 110, WTRUs 102, or Other Networks 112 of FIG. 19A, FIG. 19B, FIG. 19C, FIG. 19D, or FIG. 19E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform or implement the systems, methods and processes described herein. Specifically, any of the steps, operations, or functions described herein may be implemented in the form of such computer executable instructions, executing on the processor of an apparatus or computing system configured for wireless or wired network communications. Computer readable storage media includes volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computing system.

In describing preferred methods, systems, or apparatuses of the subject matter of the present disclosure - enabling downlink control channel for NR from 52.6 GHz and above - as illustrated in the Figures, specific terminology is employed for the sake of clarity. The claimed subject matter, however, is not intended to be limited to the specific terminology so selected.

The various techniques described herein may be implemented in connection with hardware, firmware, software or, where appropriate, combinations thereof. Such hardware, firmware, and software may reside in apparatuses located at various nodes of a communication network. The apparatuses may operate singly or in combination with each other to effectuate the methods described herein. As used herein, the terms "apparatus," "network apparatus," "node," "device," "network node," or the like may be used interchangeably. In addition, the use of the word "or" is generally used inclusively unless otherwise provided herein.

This written description uses examples for the disclosed subject matter, including the best mode, and also to enable any person skilled in the art to practice the disclosed subject matter, including making and using any devices or systems and performing any incorporated methods. The disclosed subject matter may include other examples that occur to those skilled in the art (e.g., skipping steps, combining steps, or adding steps between exemplary methods disclosed herein).

Methods, systems, and apparatuses, among other things, as described herein may provide for operation of DL control channel for NR from 52.6 GHz and above. A method, system, computer readable storage medium, or apparatus provides for monitoring PDCCH in a search space; determining that last packet is not indicated; and based on not being indicated, decoding the PDCCH in the scheduled PDSCH time-frequency allocated resource for next scheduled PDSCH. The operations may be executed by a user equipment or base station. A method, system, computer readable storage medium, or apparatus provides for receiving an indication of a monitoring span; receiving instructions to monitor a first number of slots of a plurality of slots during a monitoring span; and in response to the instructions, monitoring PDCCH during a monitoring span. The monitoring span may be received from a base station. The PDCCH may be monitored for a maximum number (e.g., a first threshold) of PDCCH candidates (e.g., scheduled PDCCH candidates). The PDCCH monitoring span may include a plurality of slots or only monitor contiguous slots within the PDCCH monitoring span. The PDCCH monitoring span may be consecutive or non-overlapping in the time domain. The search space in the PDCCH monitoring span may be configured as multiple periods of PDCCH monitoring span. The PDCCH may be monitored for a maximum number (e.g., a second threshold) of nonoverlapping CCEs. The method, system, computer readable storage medium, or apparatus may provide for receiving the maximum number of scheduled PDDCHs PDCCHs to monitor per span slot, wherein the maximum number of PDDCHs to monitor per slot may be used to limit blind decoding (BD) or control channel element (CCE) for an aligned monitoring span or non-aligned monitoring span. All combinations in this paragraph (including the removal or addition of steps) are contemplated in a manner that is consistent with the other portions of the detailed description.

It follows a list of further embodiments:
1. An apparatus that performs wireless communication, the apparatus comprising:
   a processor; and
   memory coupled with the processor, the memory comprising executable instructions stored thereon that when executed by the processor cause the processor to effectuate operations comprising:
      receiving an indication of a monitoring span for a search space;
      setting a periodicity of monitoring of the search space to a multiple of integers of a number of slots between a beginning of two consecutive monitoring occasions;
      receiving instructions to monitor a first number of slots of a plurality of slots during a monitoring span; and
      in response to the instructions, monitoring physical downlink control channel (PDCCH) during the monitoring span.
2. The apparatus of embodiment 1, wherein the monitoring span is received from a base station.
3. The apparatus of embodiment 1, wherein the PDCCH is monitored for a threshold maximum number of scheduled PDCCH candidates.
4. The apparatus of embodiment 1, wherein the PDCCH monitoring span contains plurality of slots and only monitor contiguous slots within the PDCCH monitoring span.
5. The apparatus of embodiment 1, wherein the PDCCH monitoring span are consecutive and non- overlapping in time-domain.
6. The apparatus of embodiment 1, wherein the search space in the PDCCH monitoring span is configured as multiple periods of PDCCH monitoring span.
7. The apparatus of embodiment 1, the operations further receiving the maximum number of scheduled PDCCHs to monitor per span, wherein the maximum number of PDDCHs to monitor per slot is used to limit blind decoding (BD) or control channel element (CCE) for an aligned monitoring span or non-aligned monitoring span.
8. The apparatus of embodiment 1 , the operations further comprising:
   determining that a last packet is not indicated during a monitoring span; and
   based on not being indicated, decoding the PDCCH in a scheduled physical downlink shared data channel (PDSCH) time-frequency allocated resource for next scheduled physical downlink shared data channel PDSCH.
9. The system of embodiment 1, wherein the apparatus is a user equipment.
10. An apparatus, the apparatus comprising:
   a processor; and
   memory coupled with the processor, the memory comprising executable instructions stored thereon that when executed by the processor cause the processor to effectuate operations comprising:
      determining an indication of a monitoring span; and
      sending instructions to monitor a first number of slots of a plurality of slots during the monitoring span,
         wherein the physical downlink control channel (PDCCH)is monitored for a maximum number of PDCCH candidates, and
         wherein the PDCCH is monitored for a maximum number of nonoverlapping control channel elements (CCEs).
12. The apparatus of embodiment 10, wherein the instructions to monitor the first number of slots is sent to a user equipment.
12. The apparatus of embodiment 10, wherein the PDCCH is monitored for a threshold maximum number of scheduled PDCCH candidates.
13. The apparatus of embodiment 10, wherein the monitoring span comprises a plurality of slots and provides instructions to just monitor contiguous slots within the monitoring span.
14. The apparatus of embodiment 10, wherein the monitoring span is consecutive and non-overlapping in time-domain.
15. The apparatus of embodiment 10, wherein the apparatus is a base station.
16. A method comprising:
   receiving an indication of a monitoring span for a search space or polarity of search spaces;
   setting a periodicity of monitoring of the search space to a multiple of integers of a number of slots between a beginning of two consecutive monitoring occasions;
   receiving instructions to monitor a first number of slots of a plurality of slots during a monitoring span; and
   in response to the instructions, monitoring physical downlink control channel (PDCCH) during the monitoring span.
17. The method of embodiment 16, wherein the monitoring span is received from a base station.
18. The method of embodiment 16, wherein the PDCCH monitoring span contains plurality of slots and only monitor contiguous slots within the PDCCH monitoring span.
19. The method of embodiment 16, wherein the PDCCH monitoring span are consecutive and non-overlapping in time-domain.
20. The method of embodiment 16, further comprising receiving the maximum number of scheduled PDCCHs to monitor per span, wherein the maximum number of PDDCHs to monitor per slot is used to limit blind decoding (BD) or control channel element (CCE) for an aligned monitoring span or non-aligned monitoring span.

## Claims

1. An apparatus configured to perform wireless communication, the apparatus comprising:
a processor; and
a memory coupled with the processor, the memory storing executable instructions that when executed by the processor cause the processor to effectuate operations including:
receiving, from a base station, parameters defining a monitoring span for physical downlink control channel, PDCCH, monitoring, the parameters including:
- a first parameter indicating slots for PDCCH monitoring configured as periodicity and offset, and
- a second parameter indicating a number of consecutive slots included in the monitoring span;
receiving, from the base station, an indication of slots of a plurality of slots to be monitored for a PDCCH during a monitoring span, wherein the monitoring span is defined by X slots, and the periodicity indicated by the first parameter is configured as multiple integers of X slots; and
in response to the information, monitoring the PDCCH in the slots to be monitored within the monitoring span.

2. The apparatus of claim 1, wherein the PDCCH is monitored for a threshold maximum number of scheduled PDCCH candidates.

3. The apparatus of claim 1, wherein the PDCCH monitoring span contains the plurality of slots and the operations further comprise instructions to only monitor contiguous slots within the PDCCH monitoring span.

4. The apparatus of claim 1, wherein the PDCCH monitoring spans are consecutive and non-overlapping in time-domain.

5. The apparatus of claim 1, the operations further comprising: receiving the maximum number of scheduled PDCCHs to monitor per span, wherein the maximum number of PDDCHs to monitor per slot is used to limit blind decoding, BD, or control channel element, CCE, for an aligned monitoring span or non-aligned monitoring span.

6. The system of claim 1, wherein the apparatus is a user equipment.

7. The apparatus of claim 1, wherein the apparatus is configured to monitor the PDCCH for a maximum number of PDCCH candidates and a maximum number of non-overlapping control channel elements, CCEs, per monitoring span for a search space.

8. The apparatus of claim 1, wherein the number indicated by the second parameter is Y, Y denoting a number of slots that may need to be monitored during the monitoring span.

9. The apparatus of claim 8, wherein the indication indicates a first number of slots of the plurality of slots, the first number being up to Y.

10. The apparatus of claim 1, wherein a subcarrier spacing, SCS, associated with the monitoring span is one of 480 kHz and 960 kHz.

11. An apparatus configured to perform wireless communication, the apparatus comprising:
a processor; and
memory coupled with the processor, the memory comprising executable instructions stored thereon that when executed by the processor cause the processor to effectuate operations comprising:
determining parameters defining a monitoring span for physical downlink control channel, PDCCH, monitoring, the parameters including:
- a first parameter indicating slots for PDCCH monitoring configured as periodicity and offset, and
- a second parameter indicating a number of consecutive slots included in the monitoring span;
sending, to a user equipment, the parameters defining the monitoring span;
determining an indication of slots of a plurality of slots to be monitored for a PDCCH during a monitoring span, wherein the monitoring span is defined by X slots, and the periodicity indicated by the first parameter is configured as multiple integers of X slots; and
sending to the user equipment, the indication of the slots to be monitored within the monitoring span.

12. The apparatus of claim 11, wherein the PDCCH is monitored for a threshold maximum number of scheduled PDCCH candidates.

13. The apparatus of claim 11, wherein the apparatus is a base station.

14. A method comprising:
receiving, from a base station, parameters defining a monitoring span for physical downlink control channel, PDCCH, monitoring, the parameters including:
- a first parameter indicating slots for PDCCH monitoring configured as periodicity and offset, and
- a second parameter indicating a number of consecutive slots included in the monitoring span;
receiving, from the base station, an indication of slots of a plurality of slots to be monitored for a PDCCH during a monitoring span, wherein the monitoring span is defined by X slots, and the periodicity indicated by the first parameter is configured as multiple integers of X slots; and
in response to the information, monitoring the PDCCH in the slots to be monitored within the monitoring span.

15. A method comprising:
determining parameters defining a monitoring span for physical downlink control channel, PDCCH, monitoring, the parameters including:
- a first parameter indicating slots for PDCCH monitoring configured as periodicity and offset, and
- a second parameter indicating a number of consecutive slots included in the monitoring span;
sending, to a user equipment, the parameters defining the monitoring span;
determining an indication of slots of a plurality of slots to be monitored for a PDCCH during a monitoring span, wherein the monitoring span is defined by X slots, and the periodicity indicated by the first parameter is configured as multiple integers of X slots; and
sending to the user equipment, the indication of the slots to be monitored within the monitoring span.
